# EUROPEAN PATENT APPLICATION

(11) **EP 4 786 939 A1**
(43) Date of publication of application: **05.08.2026**
(21) Application number: 26150145.6
(22) Date of filing: 05.01.2026
(51) Int. Cl.: G01L 19/00, G01L 19/06, G01L 19/14

(54) **PRESSURE SENSING APPARATUS**

(30) Priority: 04.02.2025 IN 202511009158
(71) Applicant: Honeywell International Inc., Charlotte, NC 28202 (US)
(72) Inventor: MN, Naveen Kumar, Charlotte, 28202 (US); YAGATI, Veeresh, Charlotte, 28202 (US); GIRAMALLANAVAR, Shivaraj, Charlotte, 28202 (US)
(74) Representative: Haseltine Lake Kempner LLP

(57) **Abstract**

Example pressure sensing apparatuses are provided. For example, an example pressure sensing apparatus may include a spacer and a sensing die. As an example, the spacer is secured between a header and a diaphragm while the sensing die is attached to the header. In such an example, a spacer opening extends through the spacer and the sensing die is positioned in the spacer opening.

## Description

### BACKGROUND OF THE INVENTION

Applicant has identified many technical challenges and difficulties associated with pressure sensors.

### SUMMARY OF THE INVENTION

Various embodiments described herein relate to pressure sensing apparatuses and/or methods for manufacturing pressure sensing apparatuses.

In accordance with various embodiments of the present disclosure, example pressure sensing apparatuses are provided. In some embodiments, an example pressure sensing apparatus comprises a spacer and a sensing die. In some embodiments, the spacer is secured between a header and a diaphragm. In some embodiments, a spacer opening extends through the spacer and comprises a sensing die opening portion and one or more header pin opening portions. In some embodiments, the sensing die is attached to the header and positioned in the sensing die opening portion of the spacer. In some embodiments, one or more wire bonds connect the sensing die to one or more header pins positioned in the one or more header pin opening portions.

In some embodiments, the spacer opening comprises one or more wire bond opening portions that connect the sensing die opening portion to the one or more header pin opening portions.

In some embodiments, the one or more wire bonds are positioned in the one or more wire bond opening portions.

In some embodiments, the spacer opening comprises one or more spacer opening inner surfaces having one or more tapered edges.

In some embodiments, the sensing die and the one or more wire bonds are not in contact with the one or more spacer opening inner surfaces.

In some embodiments, a header pin opening diameter of the one or more header pin opening portions approximates a header pin diameter of the one or more header pins.

In some embodiments, a spacer diameter of the spacer is larger than a header diameter of the header.

In some embodiments, the header is secured in a housing. In some embodiments, a header lateral surface of the header is in contact with a housing lateral surface of the housing.

In some embodiments, the diaphragm comprises a flat circumferential portion that supports the spacer and is secured between the housing and a ring.

In some embodiments, the housing lateral surface comprises an annular groove portion. In some embodiments, the spacer comprises a circumferential tongue portion.

In some embodiments, the spacer is secured to the housing through an engagement between the circumferential tongue portion and the annular groove portion.

In some embodiments, the header comprises a circuit board end and a sensing die end. In some embodiments, the circuit board end is opposite to the sensing die end. In some embodiments, the sensing die is secured to the sensing die end. In some embodiments, a circuit board is secured to the circuit board end.

In some embodiments, the header comprises one or more header pin channels that extend though the header from the circuit board end to the sensing die end.

In some embodiments, the one or more header pins are positioned in the one or more header pin channels and connected to the circuit board.

In some embodiments, the header further comprises a vent channel that extends through the header from the circuit board end to the sensing die end.

In some embodiments, the sensing die is connected to the vent channel at the sensing die end.

In some embodiments, an example pressure sensing apparatus comprises a vent tube connected to the vent channel of the header.

In some embodiments, the header further comprises an oil injection channel that extends though the header from the circuit board end to the sensing die end.

In some embodiments, an example pressure sensing apparatus comprises an oil sealing element sealing the oil injection channel at the circuit board end.

In some embodiments, an example pressure sensing apparatus comprises at least one screw pressing the oil sealing element to the opening of the oil injection channel.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein.
FIG. 1A and FIG. 1B illustrate example isometric views of an example pressure sensing apparatus in accordance with some embodiments of the present disclosure.
FIG. 1C and FIG. 1D illustrate example cross-section views of an example housing of the example pressure sensing apparatus shown in FIG. 1A and FIG. 1B in accordance with some embodiments of the present disclosure.
FIG. 2A illustrates an example cross-section view of an example pressure sensing apparatus in accordance with some embodiments of the present disclosure.
FIG. 2B and FIG. 2C illustrate example cross-section views of an example header of the example pressure sensing apparatus shown in FIG. 2A in accordance with some embodiments of the present disclosure.
FIG. 2D and FIG. 2E illustrate example bottom views of the example pressure sensing apparatus shown in FIG. 2A in accordance with some embodiments of the present disclosure.
FIG. 3A illustrates an example cross-section view of an example pressure sensing apparatus in accordance with some embodiments of the present disclosure.
FIG. 3B illustrates an example zoomed portion of the example cross-section view of the example pressure sensing apparatus shown in FIG. 3A in accordance with some embodiments of the present disclosure.
FIG. 4A illustrates an example cross-section view of an example pressure sensing apparatus in accordance with some embodiments of the present disclosure.
FIG. 4B illustrates an example zoomed portion of the example cross-section view of the example pressure sensing apparatus shown in FIG. 4A in accordance with some embodiments of the present disclosure.
FIG. 5A and FIG. 5B illustrate example isometric views of an example pressure sensing apparatus in accordance with some embodiments of the present disclosure.
FIG. 5C and FIG. 5D illustrate example cross-section views of the example pressure sensing apparatus shown in FIG. 5A and FIG. 5B in accordance with some embodiments of the present disclosure.
FIG. 6A illustrates an example cross-section view of an example pressure sensing apparatus in accordance with some embodiments of the present disclosure.
FIG. 6B and FIG. 6C illustrate example cross-section views of an example header of the example pressure sensing apparatus shown in FIG. 6A in accordance with some embodiments of the present disclosure.
FIG. 7A illustrates an example cross-section view of an example pressure sensing apparatus in accordance with some embodiments of the present disclosure.
FIG. 7B illustrates an example zoomed portion of the example cross-section view of the example pressure sensing apparatus shown in FIG. 7A in accordance with some embodiments of the present disclosure.
FIG. 8 illustrates example methods of assembling an example pressure sensing apparatus in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

As described above, various embodiments of the present disclosure relate generally to pressure sensing apparatuses and/or methods of manufacturing pressure sensing apparatuses. For example, various example embodiments of the present disclosure provide example pressure sensing apparatuses such as, but not limited to, flush diaphragm pressure sensors.

In the present disclosure, the term "flush diaphragm pressure sensor" refers to a type of pressure sensing device that detects, measures, and/or senses pressure of media by utilizing one or more pressure sensing dies and one or more diaphragms. For example, the outer side of a diaphragm may be exposed to and/or in contact with the media, while the inner side of the diaphragm may be sealed with a reference pressure (such as, but not limited to, absolute pressure or atmospheric pressure). In some examples, the outer surface of the diaphragm may level with surrounding surfaces of the flush diaphragm pressure sensor. In other examples, the outer surface of the diaphragm may be slightly recessed from the surrounding surfaces of the flush diaphragm pressure sensor.

Example flush diaphragm pressure sensors may provide various benefits and advantages as compared to other types of pressure sensors. For example, example flush diaphragm pressure sensors may be installed to detect pressure of media such as, but not limited to, fluid, gas, and/or the like. Because sensing dies in the flush diaphragm pressure sensors are not in direct contact with or exposed to the media, the media does not clog or erode the sensing dies and their ports. This can be beneficial when the media comprise viscous, paste-like, adhesive, crystallizing particulates and/or contamination. For example, example flush diaphragm pressure sensors may be implemented in industrial processes (such as, but not limited to, petrochemical, wastewater and slurry handling, and/or the like), medical devices (such as, but not limited to, blood pressure monitors, ventilators, and/or the like), food processing, and/or the like. In many example flush diaphragm pressure sensors, the diaphragm may be easily cleaned for long term reliability and outstanding performance.

However, Applicant has identified various technical challenges and difficulties associated with flush diaphragm pressure sensors. For example, many flush diaphragm pressure sensors use bonded strain gages and the sensed output (mv/v) is directly connected with external electrical connectors (such as, but not limited to, cables, connectors and others). Such flush diaphragm pressure sensors are difficult to manufacture due to the high production cost and the advanced skills that are required to assemble the gaged sub assembly of these flush diaphragm pressure sensors. As such, mass producing flush diaphragm pressure sensors can be a challenge and often result in low yields.

In addition, many flush diaphragm pressure sensors provide only the capability of absolute pressure sensing (i.e., sensing the pressure of media relative to zero pressure) and does not provide the capability of gauge pressure sensing (i.e., sensing the pressure of media relative to atmospheric pressure). Many flush diaphragm pressure sensors also do not provide field adjustments and diagnostics (i.e., zero and span) and do not have the capability to measure pressure in the low range (for example, less than 100 psi).

Further, many flush diaphragm pressure sensors do not implement standardized or modular approach in terms of design. For example, in the context of electrical connectors, many flush diaphragm pressure sensors are not compatible with the specific external electrical connectors that are required in the specific implementations of the flush diaphragm pressure sensors. In the context of physical connections, many flush diaphragm pressure sensors utilize 3/8-24 unified fine pitch (UNF) threads for pressure fittings, which are not compatible with many pressure fittings.

Various embodiments of the present disclosure overcome these technical challenges and difficulties, and provide various technical improvements and advantages over flush diaphragm pressure sensors.

For example, various embodiments of the present disclosure implement modular approach of designing pressure sensing apparatuses such that example pressure sensing apparatuses are low cost and compact, therefore suitable for mass production with a high yield rate. Various embodiments of the present disclosure implement corrugated diaphragms and two constructions that can detect, measure, and/or sensor absolute pressure as well as gauge pressure. In some embodiments, example pressure sensing apparatuses comprise a spacer that reduces the volume of silicon oil required for transferring pressure from the media to the sensing die, therefore improving the accuracy of pressure detection and providing the ability of measure pressure in low ranges. Additional details and technical advantages are described herein.

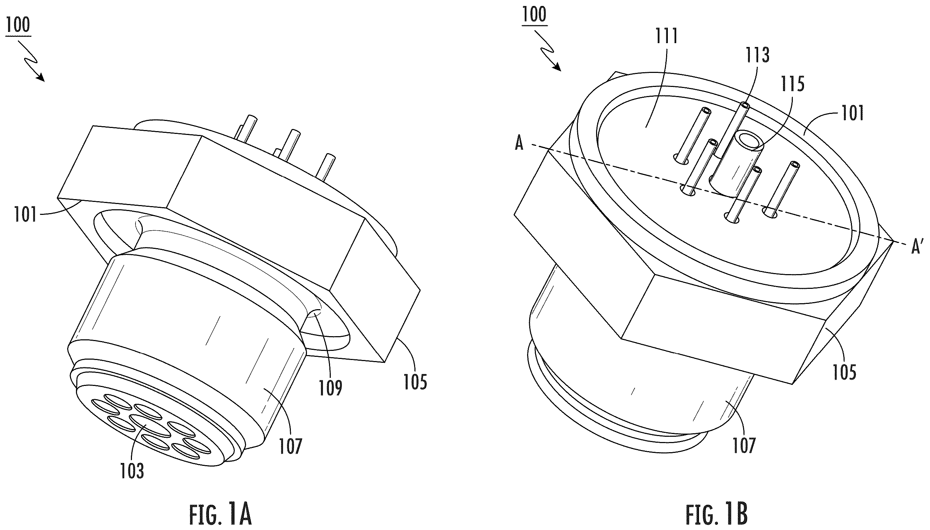

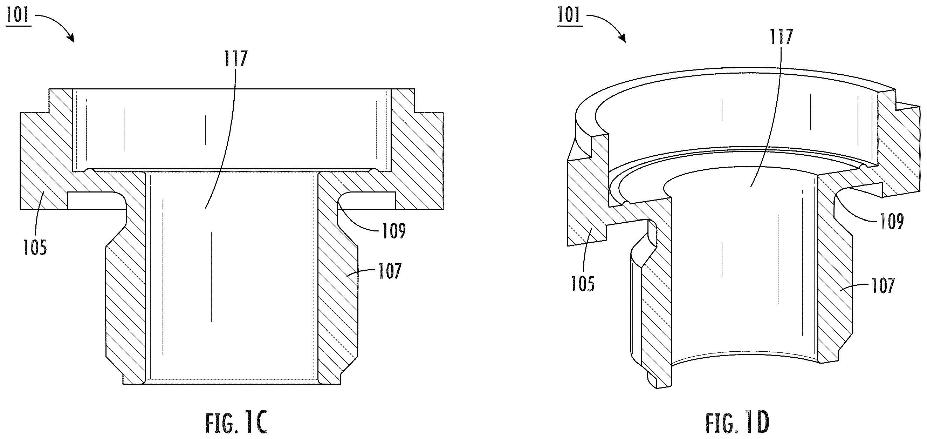

Referring now to FIG. 1A, FIG. 1B, FIG. 1C, and FIG. 1D, example views of an example pressure sensing apparatus 100 in accordance with some embodiments of the present disclosure are illustrated. In particular, FIG. 1A and FIG. 1B illustrate example isometric views of the example pressure sensing apparatus 100, and FIG. 1C and FIG. 1D illustrate example cross-section views of an example housing 101 of the example pressure sensing apparatus 100 shown in FIG. 1A and FIG. 1B taken along line A-A' shown in FIG. 1B.

In the example shown in FIG. 1A, the example pressure sensing apparatus 100 comprises a housing 101 and a diaphragm 103. In some embodiments, the housing 101 is in a shape similar to an elongated cylindrical shape. For example, the housing 101 may comprise a crown portion 105 and a shank portion 107.

In some embodiments, the crown portion 105 may be in a shape similar to a screw nut so as to improve gripping and enable wrench tightening of the example pressure sensing apparatus 100 during installation. For example, the crown portion 105 may be in a shape similar to a hexagon shape. In some embodiments, the crown portion 105 may be in a hexagon shape having across-the-flats size of 16 millimeters. Additionally, or alternatively, the crown portion 105 may be in other shapes and/or sizes.

In some embodiments, the shank portion 107 may be in a shape similar to an elongated cylinder. In some embodiments, the external shape of the shank portion 107 may be machined into external threads based on the implementation requires of the example pressure sensing apparatus 100, providing technical benefits and advantages such as, but not limited to, improved applicability of the example pressure sensing apparatus 100 to a variety of implementations.

In some embodiments, the crown portion 105 and the shank portion 107 are connected through an O-ring seating portion 109. In some embodiments, the O-ring seating portion 109 is shaped based on a standard sized O-ring, such that an O-ring may be secured in the O-ring seating portion 109 when the example pressure sensing apparatus 100 is installed.

In the example shown in FIG. 1B, the example pressure sensing apparatus 100 comprises a circuit board 111, one or more header pins 113 that are connected to the circuit board 111, and a vent tube 115.

In some embodiments, the one or more header pins 113 connect one or more sensing dies in the example pressure sensing apparatus 100 to the circuit board 111, additional details of which are described herein. In some embodiments, the vent tube 115 is open to the external environment so that the one or more sensing dies may measure gauge pressures relative to atmospheric pressure, additional details of which are described herein.

Referring now to FIG. 1C and FIG. 1D, the housing 101 comprises the crown portion 105, the O-ring seating portion 109, and the shank portion 107, as described above in connection with FIG. 1A and FIG. 1B. FIG. 1C and FIG. 1D further illustrate an example housing lateral surface 117 of the housing 101.

In some embodiments, the example housing lateral surface 117 of the housing 101 corresponds to an inner surface of the housing 101. For example, the example housing lateral surface 117 may comprise a shank lateral surface portion that corresponds to the shank portion 107, as well as a crown lateral surface portion of the crown portion 105.

In some embodiments, a header may be secured in the housing 101. For example, the header may enter inside the housing 101 and be secured to the housing lateral surface 117 through resistance welding. In such an example, the O-ring seating portion 109 may serve as a stopper when the header enters the housing 101 downwards from the top of the housing 101, as well as a heat dissipator during resistance welding to secure the header inside the housing 101. Additional details of example header and housing are described herein.

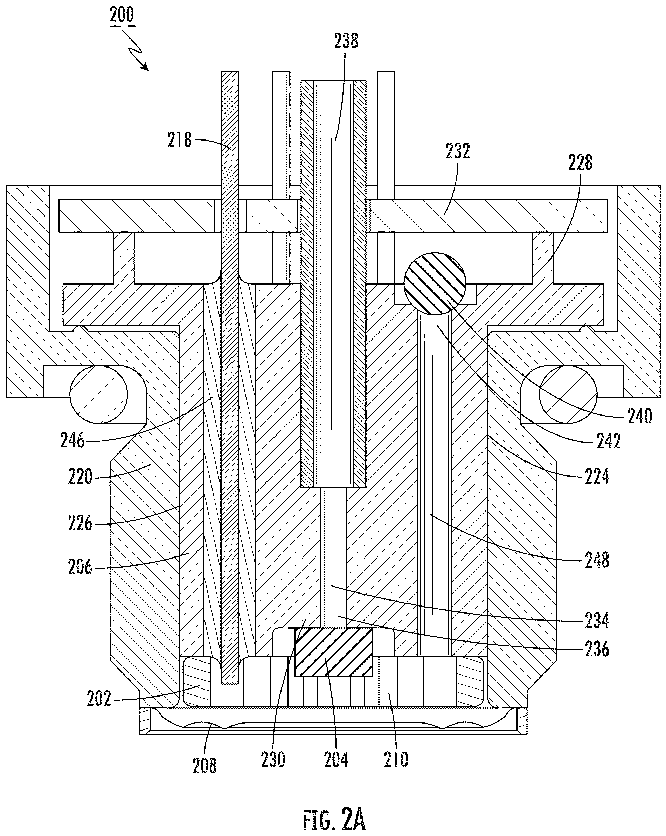

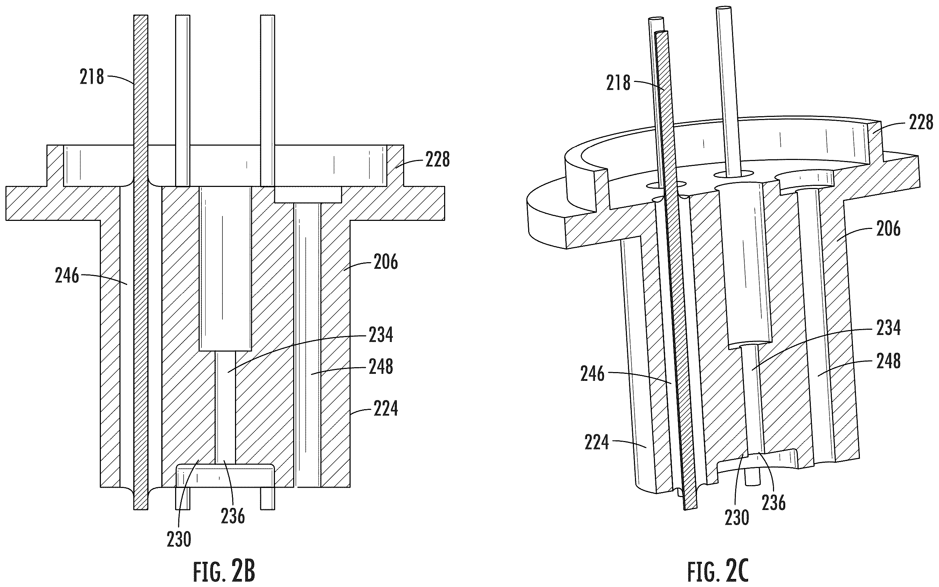

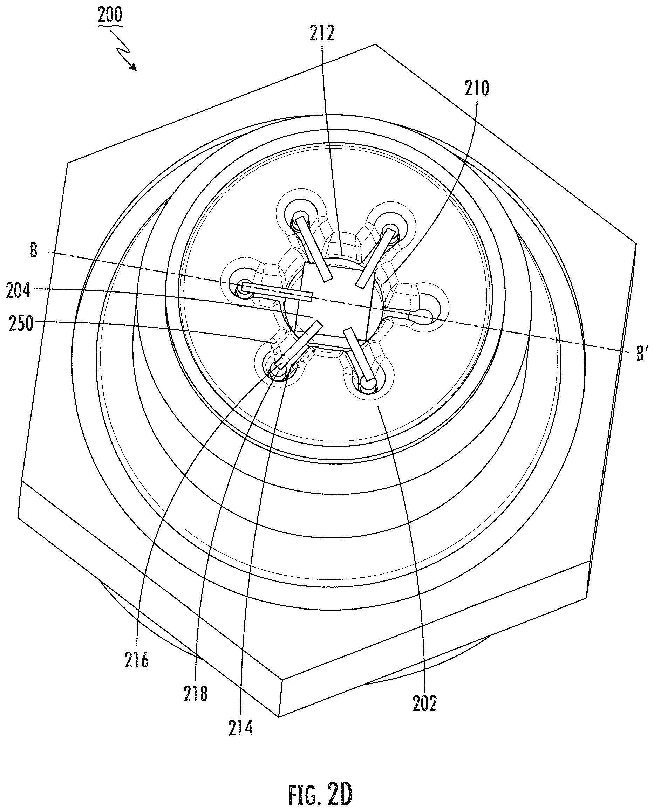

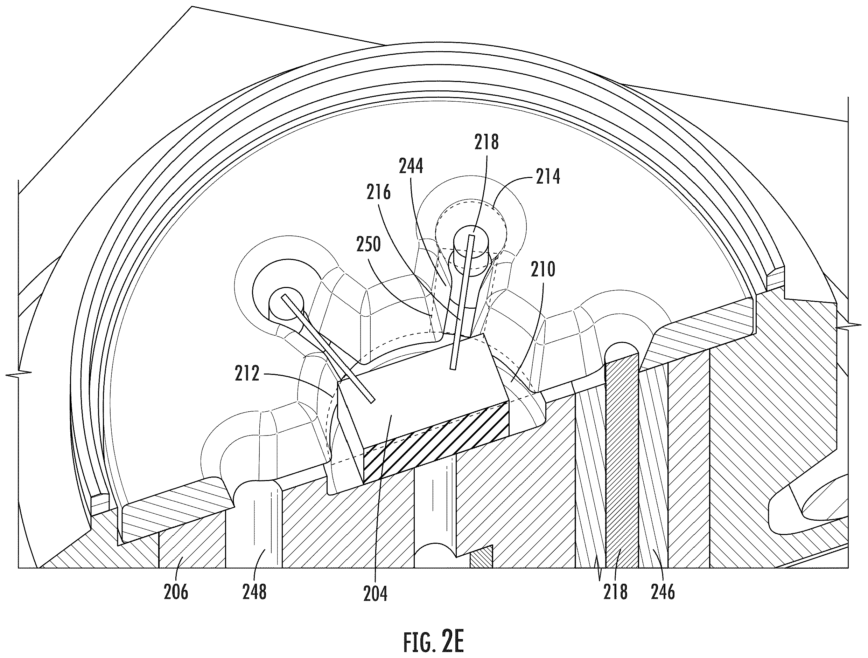

Referring now to FIG. 2A, FIG. 2B, FIG. 2C, FIG. 2D, and FIG. 2E, example views associated with an example pressure sensing apparatus 200 in accordance with some embodiments of the present disclosure are provided. In particular, the example pressure sensing apparatus 200 is configured to detect, measure, and/or sense gauge pressure relative to atmospheric pressure.

FIG. 2A illustrates an example cross-section view of the example pressure sensing apparatus 200 (for example, taken along line A-A' shown in FIG. 1B). In some embodiments, the example pressure sensing apparatus 200 comprises a sensing die 204 and a spacer 202. In some embodiments, the sensing die is attached to a header of the example pressure sensing apparatus, and the spacer is secured between the header and a diaphragm of the example pressure sensing apparatus. For example, as shown in FIG. 2A, the sensing die 204 is attached to a header 206 of the example pressure sensing apparatus 200, and the spacer 202 is secured between the header 206 and a diaphragm 208 of the example pressure sensing apparatus 200.

As described above in connection with at least FIG. 1A to FIG. 1D, the diaphragm 208 may serve as a primary interface with the media being measured. In some embodiments, the diaphragm 208 may comprise one or more materials that have corrosion resistance properties. For example, the diaphragm 208 may comprise Type 316/316L stainless steel. Additionally, or alternatively, the diaphragm 208 may comprise one or more layers of coatings to prevent corrosion. Additionally, or alternatively, the diaphragm may comprise one or more other materials. During pressure measurement operations, an external side of the diaphragm 208 may be in contact with the media (such as but not limited to, fluid, gas, and/or the like). The media may exert pressure on the external side of the diaphragm 208, and the diaphragm 208 flexes or deflects proportionally to the pressure from the media.

As shown in FIG. 2A, the sensing die 204 is positioned behind the internal side of the diaphragm 208. During pressure measurement operations, external pressure exerted on the diaphragm 208 is transferred from the diaphragm 208 to the sensing die 204 through intermediary media (such as, but not limited to, silicone oil) filled in the space between the header 206 and the diaphragm 208. For example, silicon oil (such as, but not limited to, D.C. 500 series silicone fluid) may be injected into the space between the header 206 and the diaphragm 208, and, subsequently, the space between the header 206 and the diaphragm 208 is hermetically sealed. As such, pressure that is exerted on the diaphragm 208 by the media is transferred onto the sensing die 204 through the silicone oil.

In some embodiments, the sensing die 204 may comprise electrical circuits in the form of one or more Wheatstone bridges. In some embodiments, the sensing die 204 comprises piezoresistive materials. In some embodiments, changes in pressure may result in changes in resistance of one or more resistors on the one or more Wheatstone bridges of the sensing die 204. In some embodiments, the sensing die 204 may be in the form of a pressure sensor die from RichardsonRFPD^{®} or NovaSensor^{®}. Additionally, or alternatively, the sensing die 204 may be from other manufacturers.

In some embodiments, the sensing die 204 is further connected to a circuit board 232 through one or more wire bonds and one or more header pins. In particular, the sensing die 204 is connected to one or more header pins through wire bonding, and the one or more header pins are in turn connected to the circuit board 232. Additional details associated with the wire bonds and header pins are described herein.

In some embodiments, the circuit board 232 may be in the form of a printed circuit board assembly (PCBA). For example, the circuit board 232 may comprise FR-4 material. Additionally, or alternatively, the circuit board 232 may comprise other materials. In some embodiments, the circuit board 232 detects changes in resistance of the sensing die 204, and provides a voltage output signal that reflects changes in resistance. In some embodiments, the voltage output signal further travels through spring terminals and pin arrangements to an external device. As such, the example pressure sensing apparatus 200 may be used to detect, measure, and/or sense of the pressure of media.

Referring now to FIG. 2B and FIG. 2C, example cross-section views of the header 206 of the example pressure sensing apparatus 200 are illustrated. In some embodiments, the header 206 may be in the form of a machined part that comprises rigid materials. For example, the header 206 may comprise steel (such as, but not limited, DC04 unalloyed steel). Additionally, or alternatively, the header 206 may comprise other materials.

In some embodiments, the header of the example pressure sensing apparatus comprises a circuit board end and a sensing die end. In the example shown in FIG. 2B and FIG. 2C, the header 206 comprises a circuit board end 228 and a sensing die end 230. In some embodiments, the circuit board end 228 is opposite to the sensing die end 230.

In some embodiments, the sensing die of the example pressure sensing apparatus is secured to the sensing die end of the header. For example, as shown in FIG. 2A to FIG. 2C, the header 206 comprises a cutout portion at the sensing die end 230 that is recessed from surrounding portions of the sensing die end 230. In such an example, the sensing die 204 is secured to the sensing die end 230 of the header 206 by nesting or mounting on the cutout portion of the sensing die end 230.

In some embodiments, the circuit board of the example pressure sensing apparatus is secured to the circuit board end of the header. For example, as shown in FIG. 2A to FIG. 2C, the header 206 comprises a ring portion at the circuit board end 228, and the circuit board 232 is secured to the circuit board end 228 of the header 206 by attaching to the ring portion of the circuit board end 228.

In some embodiments, the header of the example pressure sensing apparatus comprises one or more header pin channels. For example, as shown in FIG. 2A to FIG. 2C, the header 206 comprises one or more header pin channels (such as, but not limited to, a header pin channel 246). In some embodiments, each of the one or more header pin channels (such as, but not limited to, the header pin channel 246) extends through the header 206 from the sensing die end 230 to the circuit board end 228.

In some embodiments, one or more header pins are positioned in the header pin channels of the header. For example, as shown in FIG. 2A to FIG. 2C, a header pin 218 is positioned in the header pin channel 246 of the header 206. During manufacturing of the example pressure sensing apparatus 200, the one or more header pins (such as, but not limited to, the header pin 218) are inserted into the header pin channels of the header (such as, but not limited to, the header pin channel 246) and connected to the circuit board 232. In some embodiments, one or more filler materials (such as, but not limited to, glass fusion) are also filled into the header pin channels so as to stabilize positions of header pins and/or prevent contacts between header pins and the header.

As described above, example pressure sensing apparatuses in accordance with some embodiments of the present disclosure may be configured to detect, measure, and/or sense gauge pressure (for example, relative to atmospheric pressure). In such example pressure sensing apparatuses, the header further comprises a vent channel that connects the atmospheric environment to the sensing die. For example, the vent channel may extend through the header from the circuit board end to the sensing die end, and may comprise an opening at the sensing die end. In the example shown in FIG. 2A to FIG. 2C, the header 206 comprises a vent channel 234 that extends through the header 206 from the circuit board end 228 to the sensing die end 230.

In some embodiments, the sensing die 204 is connected to the vent channel 234 at the sensing die end 230 of the header 206. As described above, the sensing die 204 may be secured to the sensing die end 230 of the header 206 by nesting or mounting on the cutout portion of the sensing die end 230. In some embodiments, the vent channel 234 may comprise an opening 236 that is located at the cutout portion at the sensing die end 230. In such an example, the sensing die 204 may cover the opening 236 and be exposed to the atmospheric environment through the vent channel 234. As such, the sensing die 204 may detect, measure, and/or sense atmospheric pressure through the vent channel 234 of the header 206, and may detect, measure, and/or sense gauge pressure of media relative to atmospheric pressure.

In some embodiments, the header of the example pressure sensing apparatus further comprises a vent tube to facilitate detection and/or measurement of the atmospheric pressure. For example, as shown in FIG. 2A, the example pressure sensing apparatus 200 comprises a vent tube 238 that is connected to the vent channel 234 of the header 206. In some embodiments, the vent tube 238 is inserted to and secured within the vent channel 234.

As described above, intermediary media (such as, but not limited to, silicone oil) may be injected to the space between the header 206 and the diaphragm 208 shown in FIG. 2A. In some embodiments, a header of an example pressure sensing apparatus may comprise an oil injection channel for injecting silicone oil to the space between the header 206 and the diaphragm 208.

For example, as shown in FIG. 2A to FIG. 2C, the header 206 comprises an oil injection channel 248 that extends though the header 206 from the circuit board end 228 of the header 206 to the sensing die end 230 of the header 206. During manufacturing of the example pressure sensing apparatus 200, silicone oil may be injected through the oil injection channel 248. In some embodiments, the oil injection channel 248 of the header 206 may provide technical benefits and advantages such as, but not limited to, reducing the size of the example pressure sensing apparatus.

In some embodiments, the example pressure sensing apparatus further comprises an oil sealing element that seals the oil injection channel of the header after the silicone oil injection is completed. For example, in the example shown in FIG. 2A, the pressure sensing apparatus 200 comprises an oil sealing element 240 that is secured to cover an opening 242 of the oil injection channel 248 at the circuit board end 228 of the header 206. In some embodiments, the oil sealing element 240 may be in the shape of a ball and comprise materials such as, but not limited to, silicone, rubber, and/or the like. In some embodiments, the oil sealing element 240 may be welded to the opening 242 of the oil injection channel 248 at the circuit board end 228 of the header 206.

Example headers of pressure sensing apparatuses in accordance with some embodiments of the present disclosure provide various technical benefits and advantages. For example, as illustrated in connection with FIG. 2A to FIG. 2C, one or more header pins (for attachment to circuit board), the sensing die, and the vent tube can be packed into the example header (while the sensing die is packed inside the header near the diaphragm), thereby reducing system weight and space that are needed for pressure measurement without sacrificing accuracy of pressure measurements. In some embodiments, an example header of the example pressure sensing apparatus may be 7.5 millimeters in diameter, providing compact size while facilitating gauge pressure measurements relative to atmospheric pressure. In some embodiments, example headers may be manufactured with low cost.

In some embodiments, an example header of an example pressure sensing apparatus is secured within a housing of the example pressure sensing apparatus. In the example shown in FIG. 2A, the header 206 is secured in the housing 220.

In some embodiments, an example housing of an example pressure sensing apparatus may be a machined part that comprises rigid materials. For example, the housing 220 may comprise stainless steel (such as, but not limited to, stainless steel type 304). Additionally, or alternatively, the housing 220 may comprise other materials.

In some embodiments, an example header may be secured to the example housing through resistance welding. For example, a header lateral surface of the header is in contact with the housing lateral surface of the housing. In the example shown in FIG. 2A, a header lateral surface 224 of the header 206 is in contact with a housing lateral surface 226 of the housing 220.

One of the challenges associated with flush diaphragm pressure sensors is inaccuracy of pressure measurement caused by thermal expansion of intermediary media within the sensors. In the present disclosure, the term "thermal expansion" refers to the tendency of media to increase in volume when the temperature of the media increases. For example, when the temperature of silicone oil is increased, the overall volume of the silicon oil expands. Thermal expansion of silicone oil in flush diaphragm pressure sensors may cause inaccuracy of pressure measurements. As described above, silicone oil may be injected into a hermetically sealed space to transfer pressure from the diaphragm to the sensing die. Due to thermal expansion, the pressure measured by the sensing die may be a result of temperature increase of the silicone oil. As such, pressure measurements in many flush diaphragm pressure sensors may not be accurate.

Various embodiments of the present disclosure overcome these technical challenges, and provide various technical improvements and advantages. For example, various embodiments of the present disclosure implement spacers in the example pressure sensing apparatuses to reduce the volume of silicon oil, thereby reducing errors caused by thermal expansion of the silicone oil and increasing the accuracy of pressure measurements. Referring now to FIG. 2D and FIG. 2E, example views of the example pressure sensing apparatus 200 are illustrated. In particular, FIG. 2D illustrates an example bottom view of the example pressure sensing apparatus 200. FIG. 2E illustrate an example cross-section view of the example pressure sensing apparatus 200 taken along line B-B' shown in FIG. 2D.

As described above, an example sensing die of an example pressure sensing apparatus in accordance with some embodiments of the present disclosure may be connected to one or more header pins through wire bonding. For example, one or more wire bonds may connect the sensing die of the example pressure sensing apparatus to one or more header pins. In the example shown in FIG. 2D and FIG.2E, one or more wire bonds (such as, but not limited to, a wire bond 216) connect the sensing die 204 to one or more header pins (such as, but not limited to, the header pin 218) that are positioned in the one or more header pin opening portions (such as, but not limited to, the header pin opening portion 214).

In some embodiments, the spacer of an example pressure sensing apparatus comprises a spacer opening that extends through the spacer. For example, as shown in FIG. 2D and FIG. 2E, the spacer 202 comprises a spacer opening 210 that extends through the spacer 202.

In some embodiments, the spacer opening comprises at a sensing die opening portion and one or more header pin opening portions. For example, as shown in FIG. 2D and FIG. 2E, the spacer opening 210 comprises a sensing die opening portion 212 and one or more header pin opening portions (such as, but not limited to, a header pin opening portion 214). In some embodiments, the sensing die opening portion 212 is located at the center of the spacer 202. In some embodiments, the one or more header pin opening portions (such as, but not limited to, a header pin opening portion 214) are positioned radially outwards from the sensing die opening portion 212.

In some embodiments, header pins of an example pressure sensing apparatus have the same header pin diameter. In some embodiments, header pin opening portions of the spacer opening have the same header pin opening portion diameter. In some embodiments, the header pin opening diameter of the one or more header pin opening portions approximates the header pin diameter of the one or more header pins, providing a small clearance to restrict relative movements between spacer and header pins (which may be caused by operational vibrations).

In some embodiments, the spacer opening comprises one or more wire bond opening portions that connect the sensing die opening portion to the one or more header pin opening portions. For example, as shown in FIG. 2D and FIG. 2E, the spacer opening 210 comprises one or more wire bond opening portions (such as, but not limited to, a wire bond opening portion 250) that connect the sensing die opening portion 212 and the one or more header pin opening portions (such as, but not limited to, the header pin opening portion 214).

In some embodiments, the sensing die of the example pressure sensing apparatus is positioned in the sensing die portion of the spacer opening, the one or more header pins are positioned in the one or more header pin opening portions of the spacer opening, and the one or more wire bonds are positioned in the one or more wire bond opening portions of the spacer opening. For example, as shown in FIG. 2D and FIG. 2E, the sensing die 204 is positioned in the sensing die opening portion 212 of the spacer opening 210, the one or more header pins (such as, but not limited to, the header pin 218) are positioned in the one or more header pin opening portions (such as, but not limited to, the header pin opening portion 214), and the one or more wires bonds (such as, but not limited to, the wire bond 216) are positioned in the one or more wire bond opening portions (such as, but not limited to, the wire bond opening portion 250).

In some embodiments, the spacer opening of an example pressure sensing apparatus comprises one or more spacer opening inner surfaces having one or more tapered edges. For example, as shown in FIG. 2E, the spacer opening 210 comprises one or more spacer opening inner surfaces (such as, but not limited to, the spacer opening inner surface 244). In some embodiments, the sensing die and the one or more wire bonds are not in contact with the one or more spacer opening inner surfaces (for example, due to tapered edges of the spacer opening inner surfaces). For example, the sensing die 204 and the one or more wire bonds (such as, but not limited to, the wire bond 216) are not in contact with the spacer opening inner surface 244 of the spacer opening 210, thereby preventing the likelihood that external impact on the example pressure sensing apparatus 200 causes the one or more wire bonds to disconnect.

As highlighted in FIG. 2D and FIG. 2E, example spacers in accordance with some embodiments of the present disclosure may occupy space between the header and the diaphragm, thereby reducing the volume of silicone oil and improving the accuracy of pressure measurements.

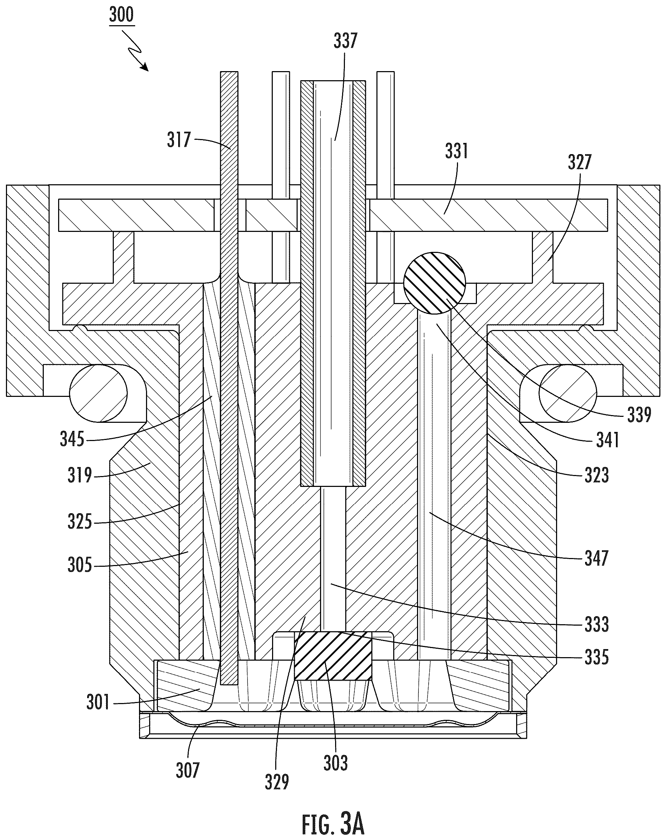

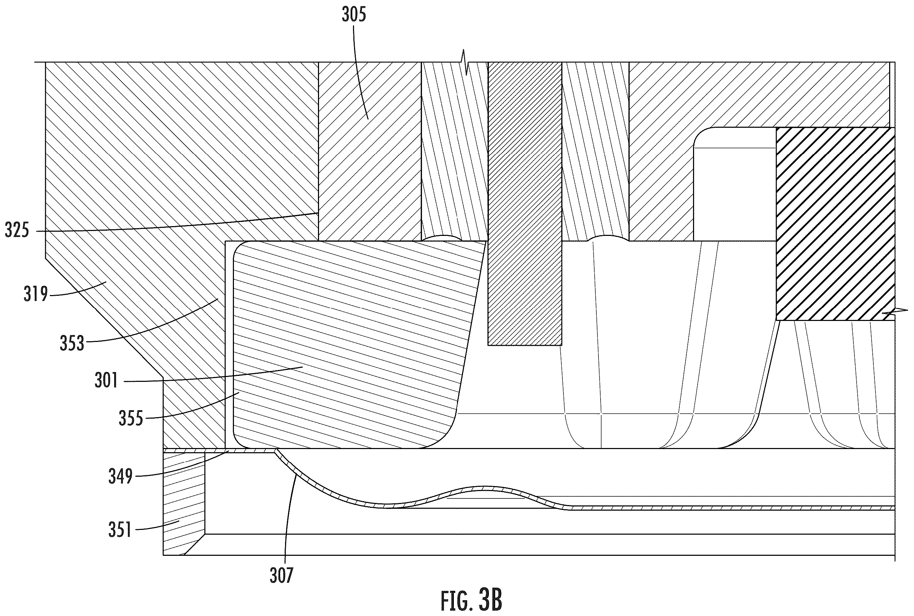

Referring now to FIG. 3A and FIG. 3B, example cross-section views of an example pressure sensing apparatus 300 in accordance with some embodiments of the present disclosure are illustrated. FIG. 3B illustrates an example zoomed portion of the example pressure sensing apparatus 300 shown in FIG. 3A. In some embodiments, the example pressure sensing apparatus 300 is configured to detect, measure, and/or sense gauge pressure relative to atmospheric pressure.

FIG. 3A illustrates an example cross-section view of the example pressure sensing apparatus 300 (for example, taken along line A-A' shown in FIG. 1B). In some embodiments, the example pressure sensing apparatus 300 comprises a sensing die 303 and a spacer 301. In some embodiments, the sensing die is attached to a header of the example pressure sensing apparatus, and the spacer is secured between the header and a diaphragm of the example pressure sensing apparatus. For example, as shown in FIG. 3A, the sensing die 303 is attached to a header 305 of the example pressure sensing apparatus 300, and the spacer 301 is secured between the header 305 and a diaphragm 307 of the example pressure sensing apparatus 300.

As described above in connection with at least FIG. 1A to FIG.1D, the diaphragm 307 may serve as a primary interface with the media being measured. In some embodiments, the diaphragm 307 may comprise one or more materials that have corrosion resistance properties. For example, the diaphragm 307 may comprise Type 316/316L stainless steel. In some embodiments, the diaphragm 307 may comprise one or more layers of coatings to prevent corrosion. Additionally, or alternatively, the diaphragm may comprise one or more other materials. During pressure measurement operations, an external side of the diaphragm 307 may be in contact with the media (such as but not limited to, fluid, gas, and/or the like). The media may exert pressure on the external side of the diaphragm 307, and the diaphragm 307 flexes or deflects proportionally to the pressure from the media.

As shown in FIG. 3A, the sensing die 303 is positioned behind the internal side of the diaphragm 307. During pressure measurement operations, external pressure exerted on the diaphragm 307 is transferred from the diaphragm 307 to the sensing die 303 through intermediary media (such as, but not limited to, silicone oil) in the space between the header 305 and the diaphragm 307. For example, silicon oil (such as, but not limited to, D.C. 500 series silicone fluid) may be injected into the space between the header 305 and the diaphragm 307, and, subsequently, the space between the header 305 and the diaphragm 307 is hermetically sealed. As such, pressure that is exerted on the diaphragm 307 by the media is transferred onto the sensing die 303 through the silicone oil.

In some embodiments, the sensing die 303 may comprise electrical circuits in the form of one or more Wheatstone bridges. In some embodiments, the sensing die 303 comprises piezoresistive materials. In some embodiments, changes in pressure may result in changes in resistance of one or more resistors on the one or more Wheatstone bridges of the sensing die 303. In some embodiments, the sensing die 303 may be in the form of a pressure sensor die from RichardsonRFPD^{®} or NovaSensor^{®}. Additionally, or alternatively, the sensing die 303 may be from other manufacturers.

In some embodiments, the sensing die 303 is further connected to a circuit board 331 through one or more wire bonds and one or more header pins. In particular, the sensing die 303 is connected to one or more header pins through wire bonding, and the one or more header pins are in turn connected to the circuit board 331. Additional details associated with the wire bonds and header pins are described herein.

In some embodiments, the circuit board 331 may be in the form of a PCBA. For example, the circuit board 331 may comprise FR-4 material. Additionally, or alternatively, the circuit board 331 may comprise other materials. In some embodiments, the circuit board 331 detects changes in resistance of the sensing die 303, and provides a voltage output signal that reflects changes in resistance. In some embodiments, the voltage output signal further travels through spring terminals and pin arrangements to an external device. As such, the example pressure sensing apparatus 300 may be used to detect, measure, and/or sense of the pressure of media.

In some embodiments, the header 305 may be in the form of a machined part that comprises rigid materials. For example, the header 305 may comprise steel (such as, but not limited, DC04 unalloyed steel). Additionally, or alternatively, the header 305 may comprise other materials.

In some embodiments, the header of the example pressure sensing apparatus comprises a circuit board end and a sensing die end. In the example shown in FIG. 3A, the header 305 comprises a circuit board end 327 and a sensing die end 329. In some embodiments, the circuit board end 327 is opposite to the sensing die end 329.

In some embodiments, the sensing die of the example pressure sensing apparatus is secured to the sensing die end of the header. For example, as shown in FIG. 3A, the header 305 comprises a cutout portion at the sensing die end 329 that is recessed from surrounding portions of the sensing die end 329. In such an example, the sensing die 303 is secured to the sensing die end 329 of the header 305 by nesting or mounting on the cutout portion of the sensing die end 329.

In some embodiments, the circuit board of the example pressure sensing apparatus is secured to the circuit board end of the header. For example, as shown in FIG. 3A, the header 305 comprises a ring portion at the circuit board end 327, and the circuit board 331 is secured to the circuit board end 327 of the header 305 by attaching to the ring portion of the circuit board end 327.

In some embodiments, the header of the example pressure sensing apparatus comprises one or more header pin channels. For example, as shown in FIG. 3A, the header 305 comprises one or more header pin channels (such as, but not limited to, a header pin channel 345). In some embodiments, each of the one or more header pin channels (such as, but not limited to, the header pin channel 345) extends through the header 305 from the sensing die end 329 to the circuit board end 327.

In some embodiments, one or more header pins are positioned in the header pin channels of the header. For example, as shown in FIG. 3A, a header pin 317 is positioned in the header pin channel 345 of the header 305. During manufacturing of the example pressure sensing apparatus 300, the one or more header pins (such as, but not limited to, the header pin 317) are inserted into the header pin channels of the header (such as, but not limited to, the header pin channel 345) and connected to the circuit board 331. In some embodiments, one or more filler materials (such as, but not limited to, glass fusion) are also filled into the header pin channels so as to stabilize positions of header pins and/or prevent contacts between header pins and the header.

As described above, example pressure sensing apparatuses in accordance with some embodiments of the present disclosure may be configured to detect, measure, and/or sense gauge pressure (for example, relative to atmospheric pressure). In such example pressure sensing apparatuses, the header further comprises a vent channel that connects the atmospheric environment to the sensing die. For example, the vent channel may extend through the header from the circuit board end to the sensing die end, and may comprise an opening at the sensing die end. In the example shown in FIG. 3A, the header 305 comprises a vent channel 333 that extends through the header 305 from the circuit board end 327 to the sensing die end 329.

In some embodiments, the sensing die 303 is connected to the vent channel 333 at the sensing die end 329 of the header 305. As described above, the sensing die 303 may be secured to the sensing die end 329 of the header 305 by nesting or mounting on the cutout portion of the sensing die end 329. In some embodiments, the vent channel 333 may comprise an opening 335 that is located at the cutout portion at the sensing die end 329. In such an example, the sensing die 303 may cover the opening 335 and be exposed to the atmospheric environment through the vent channel 333. As such, the sensing die 303 may detect, measure, and/or sense atmospheric pressure through the vent channel 333 of the header 305, and may detect, measure, and/or sense gauge pressure of media relative to atmospheric pressure.

In some embodiments, the header of the example pressure sensing apparatus further comprises a vent tube to facilitate detection and/or measurement of the atmospheric pressure. For example, as shown in FIG. 3A, the example pressure sensing apparatus 300 comprises a vent tube 337 that is connected to the vent channel 333 of the header 305. In some embodiments, the vent tube 337 is inserted to and secured within the vent channel 333.

As described above, intermediary media (such as, but not limited to, silicone oil) may be injected to the space between the header 305 and the diaphragm 307 shown in FIG. 3A. In some embodiments, a header of an example pressure sensing apparatus may comprise an oil injection channel for injecting silicone oil to the space between the header 305 and the diaphragm 307.

For example, as shown in FIG. 3A, the header 305 comprises an oil injection channel 347 that extends though the header 305 from the circuit board end 327 of the header 305 to the sensing die end 329 of the header 305. During manufacturing of the example pressure sensing apparatus 300, silicone oil may be injected through the oil injection channel 347. In some embodiments, the oil injection channel 347 of the header 305 may provide technical benefits and advantages such as, but not limited to, reducing the size of the example pressure sensing apparatus.

In some embodiments, the example pressure sensing apparatus further comprises an oil sealing element that seals the oil injection channel of the header after the silicone oil injection is completed. For example, in the example shown in FIG. 3A, the pressure sensing apparatus 300 comprises an oil sealing element 339 that is secured to cover an opening 341 of the oil injection channel 347 at the circuit board end 327 of the header 305. In some embodiments, the oil sealing element 339 may be in the shape of a ball and comprise materials such as, but not limited to, silicone, rubber, and/or the like. In some embodiments, the oil sealing element 339 may be welded to the opening 341 of the oil injection channel 347 at the circuit board end 327 of the header 305.

Example headers of pressure sensing apparatuses in accordance with some embodiments of the present disclosure provide various technical benefits and advantages. For example, as illustrated in connection with FIG. 3A, one or more header pins (for attachment to circuit board), the sensing die, and the vent tube can be packed into the example header (while the sensing die is packed inside the header near the diaphragm), thereby reducing system weight and space that are needed for pressure measurement without sacrificing accuracy of pressure measurements. In some embodiments, an example header of the example pressure sensing apparatus may be 7.5 millimeters in diameter, providing compact size while facilitating gauge pressure measurements relative to atmospheric pressure. In some embodiments, example headers may be manufactured with low cost.

In some embodiments, an example header of an example pressure sensing apparatus is secured within a housing of the example pressure sensing apparatus. In the example shown in FIG. 3A, the header 305 is secured in the housing 319.

In some embodiments, an example housing of an example pressure sensing apparatus may be a machined part that comprises rigid materials. For example, the housing 319 may comprise stainless steel (such as, but not limited to, stainless steel type 304). Additionally, or alternatively, the housing 319 may comprise other materials.

In some embodiments, an example header may be secured to the example housing through resistance welding. For example, a header lateral surface of the header is in contact with the housing lateral surface of the housing. In the example shown in FIG. 3A, a header lateral surface 323 of the header 305 is in contact with a housing lateral surface 325 of the housing 319.

In some embodiments, the spacer diameter of the spacer is larger than a header diameter of the header. For example, as shown in FIG. 3A, the diameter of the spacer 301 is larger than the diameter of the header 305 so that the spacer 301 can cover areas besides the sensing die 303, thereby reducing the volume of silicon oil and increasing the accuracy of pressure measurements. Similar to those described above in connection with at least FIG. 2A to FIG. 2E, the spacer 301 is not in contact with the sensing die 303 or any wire bonds that are connected to the sensing die 303.

Referring now to FIG. 3B, an example zoomed portion of the example cross-section view of the example pressure sensing apparatus 300 shown in FIG. 3A is illustrated.

In some embodiments, the diaphragm comprises a flat circumferential portion that supports the spacer and is secured between the housing and a ring. For example, as shown in FIG. 3B, the diaphragm 307 comprises a flat circumferential portion 349. In some embodiments, the flat circumferential portion 349 supports the spacer 301, restricting vertical motion of the spacer 301. In some embodiments, the flat circumferential portion 349 is secured between the housing 319 and a ring 351. In such an example, the ring 351 is used to weld the diaphragm 307 onto the housing 319 and protects the diaphragm 307 from damage caused by media during pressure measurement operations.

In some embodiments, the housing lateral surface of the housing comprises an annular groove portion. In some embodiments, the spacer comprises a circumferential tongue portion. In some embodiments, the spacer is secured to the housing through an engagement between the circumferential tongue portion and the annular groove portion. For example, as shown in FIG. 3B, the housing lateral surface 325 of the housing 319 comprises an annular groove portion 353, while the spacer 301 comprises a circumferential tongue portion 355. In such an example, the spacer 301 is secured to the housing 319 through an engagement between the circumferential tongue portion 355 of the spacer 301 and the annular groove portion 353 of the housing 319, thereby restricting vertical movement of the spacer 301.

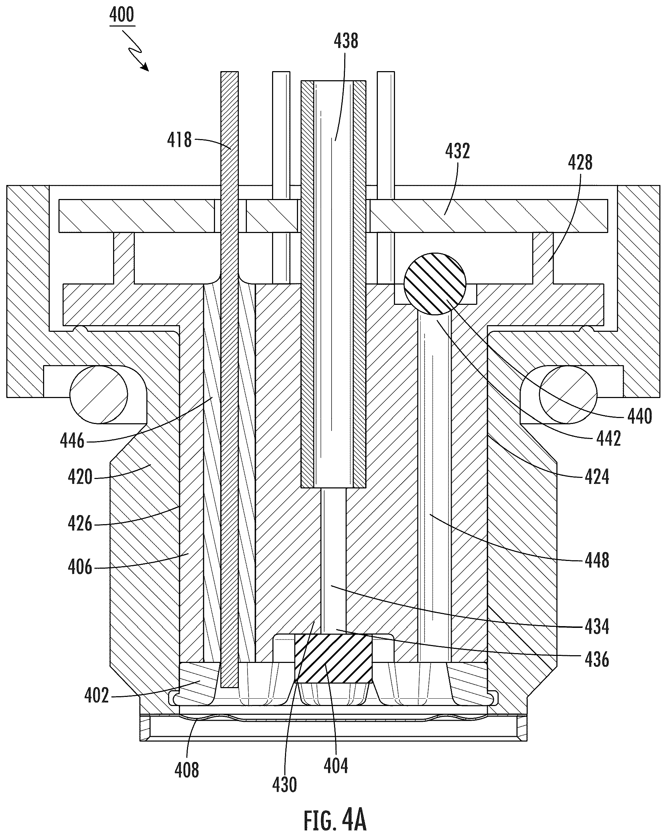

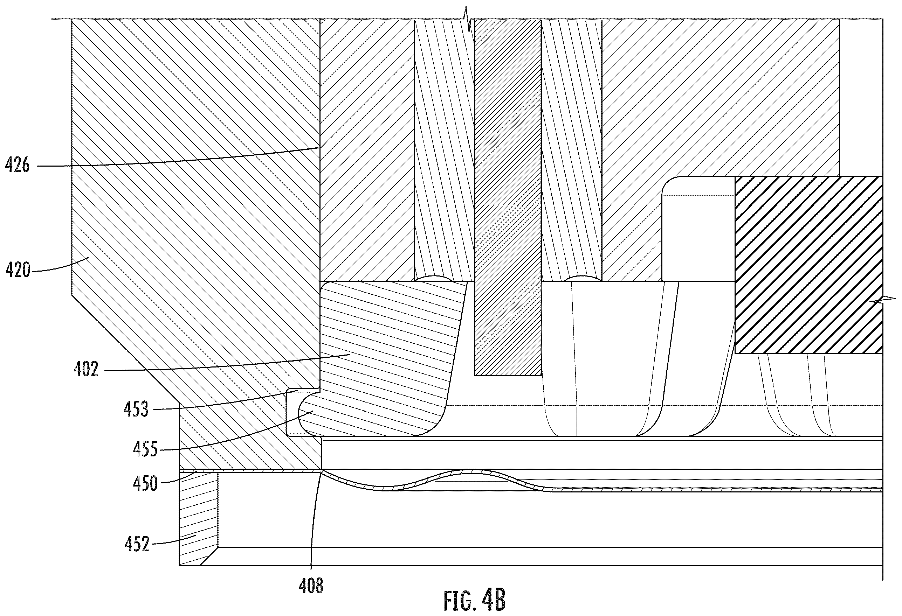

Referring now to FIG. 4A and FIG. 4B, example cross-section views of an example pressure sensing apparatus 400 in accordance with some embodiments of the present disclosure are illustrated. In particular, FIG. 4B illustrates an example zoomed portion of the example pressure sensing apparatus 400 shown in FIG. 4A. In particular, the example pressure sensing apparatus 400 is configured to detect, measure, and/or sense gauge pressure relative to atmospheric pressure.

FIG. 4A illustrates an example cross-section view of the example pressure sensing apparatus 400 (for example, taken along line A-A' shown in FIG. 1B). In some embodiments, the example pressure sensing apparatus 400 comprises a sensing die 404 and a spacer 402. In some embodiments, the sensing die is attached to a header of the example pressure sensing apparatus, and the spacer is secured between the header and a diaphragm of the example pressure sensing apparatus. For example, as shown in FIG. 4A, the sensing die 404 is attached to a header 406 of the example pressure sensing apparatus 400, and the spacer 402 is secured between the header 406 and a diaphragm 408 of the example pressure sensing apparatus 400.

As described above in connection with at least FIG. 1A to FIG.1D, the diaphragm 408 may serve as a primary interface with the media being measured. In some embodiments, the diaphragm 408 may comprise one or more materials that have corrosion resistance properties. For example, the diaphragm 408 may comprise Type 316/316L stainless steel. In some embodiments, the diaphragm 408 may comprise one or more layers of coatings to prevent corrosion. Additionally, or alternatively, the diaphragm may comprise one or more other materials. During pressure measurement operations, an external side of the diaphragm 408 may be in contact with the media (such as but not limited to, fluid, gas, and/or the like). The media may exert pressure on the external side of the diaphragm 408, and the diaphragm 408 flexes or deflects proportionally to the pressure from the media.

As shown in FIG. 4A, the sensing die 404 is positioned behind the internal side of the diaphragm 408. During pressure measurement operations, external pressure exerted on the diaphragm 408 is transferred from the diaphragm 408 to the sensing die 404 through intermediary media (such as, but not limited to, silicone oil) in the space between the header 406 and the diaphragm 408. For example, silicon oil (such as, but not limited to, D.C. 500 series silicone fluid) may be injected into the space between the header 406 and the diaphragm 408, and, subsequently, the space between the header 406 and the diaphragm 408 is hermetically sealed. As such, pressure that is exerted on the diaphragm 408 by the media is transferred onto the sensing die 404 through the silicone oil.

In some embodiments, the sensing die 404 may comprise electrical circuits in the form of one or more Wheatstone bridges. In some embodiments, the sensing die 404 comprises piezoresistive materials. In some embodiments, changes in pressure may result in changes in resistance of one or more resistors on the one or more Wheatstone bridges of the sensing die 404. In some embodiments, the sensing die 404 may be in the form of a pressure sensor die from RichardsonRFPD^{®} or NovaSensor^{®}. Additionally, or alternatively, the sensing die 404 may be from other manufacturers.

In some embodiments, the sensing die 404 is further connected to a circuit board 432 through one or more wire bonds and one or more header pins. In particular, the sensing die 404 is connected to one or more header pins through wire bonding, and the one or more header pins are in turn connected to the circuit board 432. Additional details associated with the wire bonds and header pins are described herein.

In some embodiments, the circuit board 432 may be in the form of a PCBA. For example, the circuit board 432 may comprise FR-4 material. Additionally, or alternatively, the circuit board 432 may comprise other materials. In some embodiments, the circuit board 432 detects changes in resistance of the sensing die 404, and provides a voltage output signal that reflects changes in resistance. In some embodiments, the voltage output signal further travels through spring terminals and pin arrangements to an external device. As such, the example pressure sensing apparatus 400 may be used to detect, measure, and/or sense of the pressure of media.

In some embodiments, the header 406 may be in the form of a machined part that comprises rigid materials. For example, the header 406 may comprise steel (such as, but not limited, DC04 unalloyed steel). Additionally, or alternatively, the header 406 may comprise other materials.

In some embodiments, the header of the example pressure sensing apparatus comprises a circuit board end and a sensing die end. In the example shown in FIG. 4A, the header 406 comprises a circuit board end 428 and a sensing die end 430. In some embodiments, the circuit board end 428 is opposite to the sensing die end 430.

In some embodiments, the sensing die of the example pressure sensing apparatus is secured to the sensing die end of the header. For example, as shown in FIG. 4A, the header 406 comprises a cutout portion at the sensing die end 430 that is recessed from surrounding portions of the sensing die end 430. In such an example, the sensing die 404 is secured to the sensing die end 430 of the header 406 by nesting or mounting on the cutout portion of the sensing die end 430.

In some embodiments, the circuit board of the example pressure sensing apparatus is secured to the circuit board end of the header. For example, as shown in FIG. 4A, the header 406 comprises a ring portion at the circuit board end 428, and the circuit board 432 is secured to the circuit board end 428 of the header 406 by attaching to the ring portion of the circuit board end 428.

In some embodiments, the header of the example pressure sensing apparatus comprises one or more header pin channels. For example, as shown in FIG. 4A, the header 406 comprises one or more header pin channels (such as, but not limited to, a header pin channel 446). In some embodiments, each of the one or more header pin channels (such as, but not limited to, the header pin channel 446) extends through the header 406 from the sensing die end 430 to the circuit board end 428.

In some embodiments, one or more header pins are positioned in the header pin channels of the header. For example, as shown in FIG. 4A, a header pin 418 is positioned in the header pin channel 446 of the header 406. During manufacturing of the example pressure sensing apparatus 400, the one or more header pins (such as, but not limited to, the header pin 418) are inserted into the header pin channels of the header (such as, but not limited to, the header pin channel 446) and connected to the circuit board 432. In some embodiments, one or more filler materials (such as, but not limited to, glass fusion) are also filled into the header pin channels so as to stabilize positions of header pins and/or prevent contacts between header pins and the header.

As described above, example pressure sensing apparatuses in accordance with some embodiments of the present disclosure may be configured to detect, measure, and/or sense gauge pressure (for example, relative to atmospheric pressure). In such example pressure sensing apparatuses, the header further comprises a vent channel that connects the atmospheric environment to the sensing die. For example, the vent channel may extend through the header from the circuit board end to the sensing die end, and may comprise an opening at the sensing die end. In the example shown in FIG. 4A, the header 406 comprises a vent channel 434 that extends through the header 406 from the circuit board end 428 to the sensing die end 430.

In some embodiments, the sensing die 404 is connected to the vent channel 434 at the sensing die end 430 of the header 406. As described above, the sensing die 404 may be secured to the sensing die end 430 of the header 406 by nesting or mounting on the cutout portion of the sensing die end 430. In some embodiments, the vent channel 434 may comprise an opening 436 that is located at the cutout portion of the sensing die end 430. In such an example, the sensing die 404 may cover the opening 436 and be exposed to the atmospheric environment through the vent channel 434. As such, the sensing die 404 may detect, measure, and/or sense atmospheric pressure through the vent channel 434 of the header 406, and may detect, measure, and/or sense gauge pressure of media relative to atmospheric pressure.

In some embodiments, the header of the example pressure sensing apparatus further comprises a vent tube to facilitate detection and/or measurement of the atmospheric pressure. For example, as shown in FIG. 4A, the example pressure sensing apparatus 400 comprises a vent tube 438 that is connected to the vent channel 434 of the header 406. In some embodiments, the vent tube 438 is inserted to and secured within the vent channel 434.

As described above, intermediary media (such as, but not limited to, silicone oil) may be injected to the space between the header 406 and the diaphragm 408 shown in FIG. 4A. In some embodiments, a header of an example pressure sensing apparatus may comprise an oil injection channel for injecting silicone oil to the space between the header 406 and the diaphragm 408.

For example, as shown in FIG. 4A, the header 406 comprises an oil injection channel 448 that extends though the header 406 from the circuit board end 428 of the header 406 to the sensing die end 430 of the header 406. During manufacturing of the example pressure sensing apparatus 400, silicone oil may be injected through the oil injection channel 448. In some embodiments, the oil injection channel 448 of the header 406 may provide technical benefits and advantages such as, but not limited to, reducing the size of the example pressure sensing apparatus.

In some embodiments, the example pressure sensing apparatus further comprises an oil sealing element that seals the oil injection channel of the header after the silicone oil injection is completed. For example, in the example shown in FIG. 4A, the pressure sensing apparatus 400 comprises an oil sealing element 440 that is secured to cover an opening 442 of the oil injection channel 448 at the circuit board end 428 of the header 406. In some embodiments, the oil sealing element 440 may be in the shape of a ball and comprise materials such as, but not limited to, silicone, rubber, and/or the like. In some embodiments, the oil sealing element 440 may be welded to the opening 442 of the oil injection channel 448 at the circuit board end 428 of the header 406.

Example headers of pressure sensing apparatuses in accordance with some embodiments of the present disclosure provide various technical benefits and advantages. For example, as illustrated in connection with FIG. 4A, one or more header pins (for attachment to circuit board), the sensing die, and the vent tube can be packed into the example header (while the sensing die is packed inside the header near the diaphragm), thereby reducing system weight and space that are needed for pressure measurement without sacrificing accuracy of pressure measurements. In some embodiments, an example header of the example pressure sensing apparatus may be 7.5 millimeters in diameter, providing compact size while facilitating gauge pressure measurements relative to atmospheric pressure. In some embodiments, example headers may be manufactured with low cost.

In some embodiments, an example header of an example pressure sensing apparatus is secured within a housing of the example pressure sensing apparatus. In the example shown in FIG. 4A, the header 406 is secured in the housing 420.

In some embodiments, an example housing of an example pressure sensing apparatus may be a machined part that comprises rigid materials. For example, the housing 420 may comprise stainless steel (such as, but not limited to, stainless steel type 304). Additionally, or alternatively, the housing 420 may comprise other materials.

In some embodiments, an example header may be secured to the example housing through resistance welding. For example, a header lateral surface of the header is in contact with the housing lateral surface of the housing. In the example shown in FIG. 4A, a header lateral surface 424 of the header 406 is in contact with a housing lateral surface 426 of the housing 420.

In some embodiments, the spacer diameter of the spacer is larger than a header diameter of the header. For example, as shown in FIG. 4A, the diameter of the spacer 402 is larger than the diameter of the header 406, so that the spacer 402 can cover areas besides the sensing die 404, thereby reducing the volume of silicon oil and increasing the accuracy of pressure measurements. Similar to those described above in connection with at least FIG. 2A to FIG. 2E, the spacer 402 is not in contact with the sensing die 404 or any wire bonds connected to the sensing die 404.

Referring now to FIG. 4B, an example zoomed portion of the example cross-section view of the example pressure sensing apparatus 400 shown in FIG. 4A is illustrated.

In some embodiments, the diaphragm comprises a flat circumferential portion that supports the spacer and is secured between the housing and a ring. For example, as shown in FIG. 4B, the diaphragm 408 comprises a flat circumferential portion 450. In some embodiments, the flat circumferential portion 450 supports the spacer 402, restricting vertical motion of the spacer 402. In some embodiments, the flat circumferential portion 450 is secured between the housing 420 and a ring 452. In such an example, the ring 452 is used to weld the diaphragm 408 onto the housing 420 and protects the diaphragm 408 from damage caused by media during pressure measurement operations.

In some embodiments, the housing lateral surface of the housing comprises an annular groove portion. In some embodiments, the spacer comprises a circumferential tongue portion. In some embodiments, the spacer is secured to the housing through an engagement between the circumferential tongue portion and the annular groove portion. For example, as shown in FIG. 4B, the housing lateral surface 426 of the housing 420 comprises an annular groove portion 453, while the spacer 402 comprises a circumferential tongue portion 455. In such an example, the spacer 402 is secured to the housing 420 through an engagement between the circumferential tongue portion 455 of the spacer 402 and the annular groove portion 453 of the housing 420, thereby restricting the vertical movement of the spacer 402.

Comparing the circumferential tongue portion 455 of the spacer 402 with the circumferential tongue portion 355 of the spacer 301, the circumferential tongue portion 455 is smaller in size and may comprise flexible or collapsible material so as to facilitate the engagement between the circumferential tongue portion 455 and the annular groove portion 453.

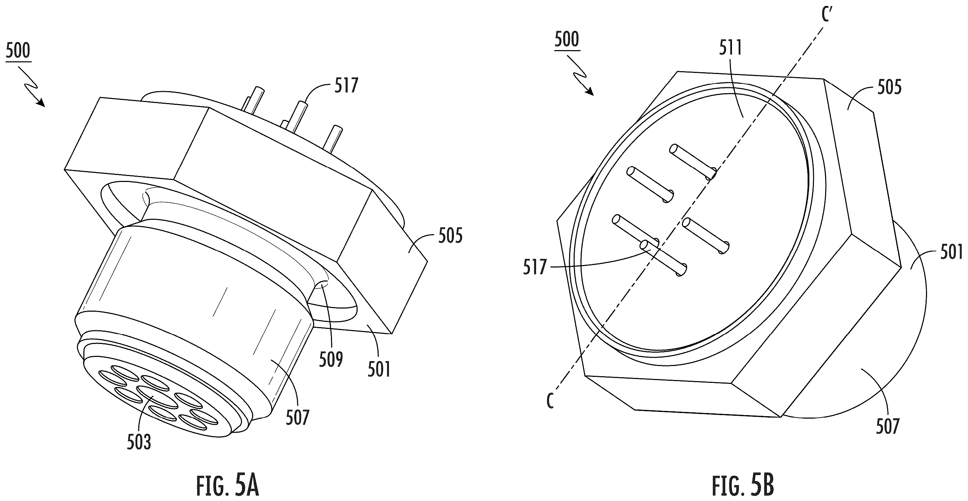

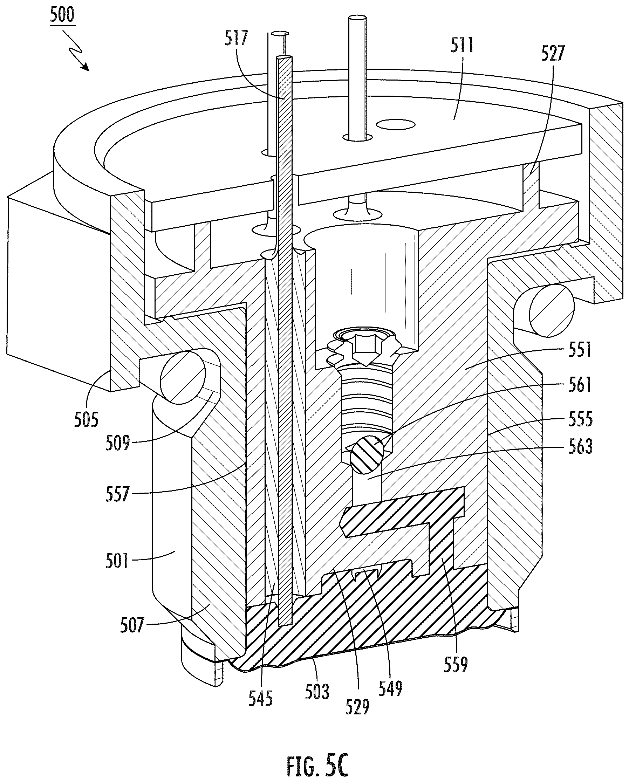

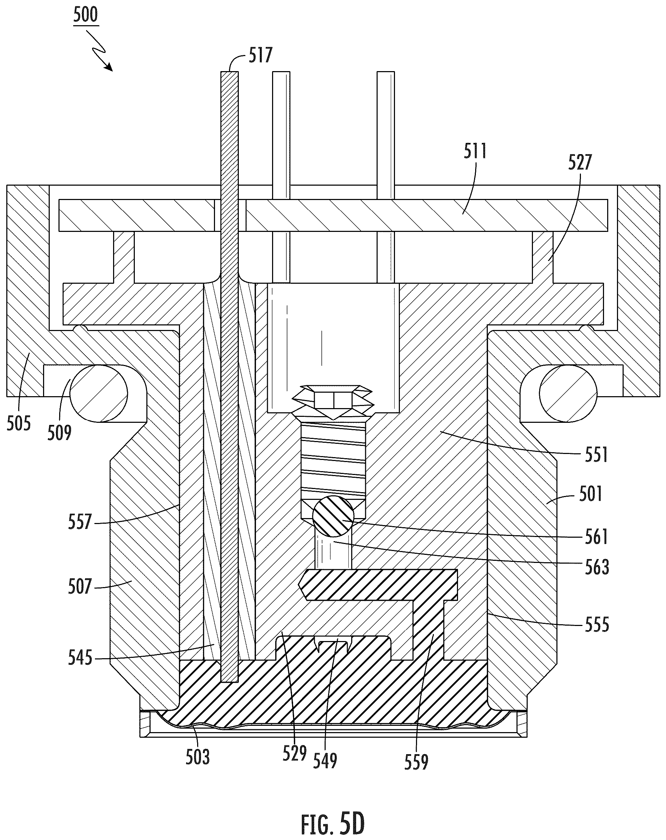

Referring now to FIG. 5A, FIG. 5B, FIG. 5C, and FIG. 5D, example views of an example pressure sensing apparatus 500 in accordance with some embodiments of the present disclosure are illustrated. In particular, FIG. 5A and FIG. 5B illustrate example isometric views of the example pressure sensing apparatus 500, and FIG. 5C and FIG. 5D illustrate example cross-section views of the example pressure sensing apparatus 500 taken along line C-C' shown in FIG. 5B. The example pressure sensing apparatus 500 shown in FIG. 5A to FIG. 5D is configured to detect, measure, and/or sense absolute pressure relative to zero pressure.

In the example shown in FIG. 5A, the example pressure sensing apparatus 500 comprises a housing 501 and a diaphragm 503. In some embodiments, the housing 501 is in a shape similar to an elongated cylindrical shape. For example, the housing 501 may comprise a crown portion 505 and a shank portion 507.

In some embodiments, the crown portion 505 may be in a shape similar to a screw nut so as to improve gripping and enable wrench tightening of the example pressure sensing apparatus 500 during installation. For example, the crown portion 505 may be in a shape similar to a hexagon shape. In some embodiments, the crown portion 505 may be in a hexagon shape having across-the-flats size of 16 millimeters. Additionally, or alternatively, the crown portion 505 may be in other shapes and/or sizes.

In some embodiments, the shank portion 507 may be in a shape similar to an elongated cylinder. In some embodiments, the external shape of the shank portion 507 may be machined into external threads based on the implementation requirements of the example pressure sensing apparatus 500, providing technical benefits and advantages such as, but not limited to, improved applicability of the example pressure sensing apparatus 500 to a variety of implementations.

In some embodiments, the crown portion 505 and the shank portion 507 are connected through an O-ring seating portion 509. In some embodiments, the O-ring seating portion 509 is shaped based on a standard sized O-ring, such that an O-ring may be secured in the O-ring seating portion 509 when the example pressure sensing apparatus 500 is installed.

In the example shown in FIG. 5A and FIG. 5B, the example pressure sensing apparatus 500 comprises a circuit board 511 and one or more header pins (such as, but not limited to, the header pin 517) that are connected to the circuit board 511. Compared with the example pressure sensing apparatus 100 shown in FIG. 1A to FIG. 1D, the example pressure sensing apparatus 500 does not comprise any vent tube.

In some embodiments, the one or more header pins (such as, but not limited to, the header pin 517) connect one or more sensing dies in the example pressure sensing apparatus 500 to the circuit board 511, additional details of which are described herein.

Referring now to FIG. 5C and FIG. 5D, the example pressure sensing apparatus 500 comprises a sensing die 549. In some embodiments, the sensing die 549 is attached to a header 551 of the example pressure sensing apparatus 500.

In some embodiments, the diaphragm 503 may serve as a primary interface with the media being measured. In some embodiments, the diaphragm 503 may comprise one or more materials that have corrosion resistance properties. For example, the diaphragm 503 may comprise Type 316/316L stainless steel. Additionally, or alternatively, the diaphragm 503 may comprise one or more layers of coatings to prevent corrosion. Additionally, or alternatively, the diaphragm 503 may comprise one or more other materials. During pressure measurement operations, an external side of the diaphragm 503 may be in contact with the media (such as but not limited to, fluid, gas, and/or the like). The media may exert pressure on the external side of the diaphragm 503, and the diaphragm 503 flexes or deflects proportionally to the pressure from the media.

As shown in FIG. 5C, the sensing die 549 is positioned behind the internal side of the diaphragm 503. During pressure measurement operations, external pressure exerted on the diaphragm 503 is transferred from the diaphragm 503 to the sensing die 549 through intermediary media (such as, but not limited to, silicone oil) in the space between the header 551 and the diaphragm 503. For example, silicon oil (such as, but not limited to, D.C. 500 series silicone fluid) may be injected into the space between the header 551 and the diaphragm 503, and, subsequently, the space between the header 551 and the diaphragm 503 is hermetically sealed. As such, pressure that is exerted on the diaphragm 503 by the media is transferred onto the sensing die 549 through the silicone oil.

In some embodiments, the sensing die 549 may comprise electrical circuits in the form of one or more Wheatstone bridges. In some embodiments, the sensing die 549 comprises piezoresistive materials. In some embodiments, changes in pressure may result in changes in resistance of one or more resistors on the one or more Wheatstone bridges of the sensing die 549. In some embodiments, the sensing die 549 may be in the form of a pressure sensor die from RichardsonRFPD^{®} or NovaSensor^{®}. Additionally, or alternatively, the sensing die 549 may be from other manufacturers.

In some embodiments, the sensing die 549 is further connected to a circuit board 511 through one or more wire bonds and one or more header pins. In particular, the sensing die 549 is connected to one or more header pins through wire bonding, and the one or more header pins are in turn connected to the circuit board 511. Additional details associated with the wire bonds and header pins are described herein.

In some embodiments, the circuit board 511 may be in the form of a PCBA. For example, the circuit board 511 may comprise FR-4 material. Additionally, or alternatively, the circuit board 511 may comprise other materials. In some embodiments, the circuit board 511 detects changes in resistance of the sensing die 549, and provides a voltage output signal that reflects changes in resistance. In some embodiments, the voltage output signal further travels through spring terminals and pin arrangements to an external device. As such, the example pressure sensing apparatus 500 may be used to detect, measure, and/or sense of the pressure of media.

In some embodiments, the header 551 may be in the form of a machined part that comprises rigid materials. For example, the header 551 may comprise steel (such as, but not limited, DC04 unalloyed steel). Additionally, or alternatively, the header 551 may comprise other materials.

In some embodiments, the header of the example pressure sensing apparatus comprises a circuit board end and a sensing die end. In the example shown in FIG. 5C and FIG. 5D, the header 551 comprises a circuit board end 527 and a sensing die end 529. In some embodiments, the circuit board end 527 is opposite to the sensing die end 529.

In some embodiments, the sensing die of the example pressure sensing apparatus is secured to the sensing die end of the header. For example, as shown in FIG. 5C to FIG. 5D, the header 551 comprises a cutout portion at the sensing die end 529 that is recessed from surrounding portions of the sensing die end 529. In such an example, the sensing die 549 is secured to the sensing die end 529 of the header 551 by nesting or mounting on the cutout portion of the sensing die end 529.

In some embodiments, the circuit board of the example pressure sensing apparatus is secured to the circuit board end of the header. For example, as shown in FIG. 5C to FIG. 5D, the header 551 comprises a ring portion at the circuit board end 527, and the circuit board 511 is secured to the circuit board end 527 of the header 551 by attaching to the ring portion of the circuit board end 527.

In some embodiments, the header of the example pressure sensing apparatus comprises one or more header pin channels. For example, as shown in FIG. 5C to FIG. 5D, the header 551 comprises one or more header pin channels (such as, but not limited to, a header pin channel 545). In some embodiments, each of the one or more header pin channels (such as, but not limited to, the header pin channel 545) extends through the header 551 from the sensing die end 529 to the circuit board end 527.

In some embodiments, one or more header pins are positioned in the header pin channels of the header. For example, as shown in FIG. 5C to FIG. 5D, a header pin 517 is positioned in the header pin channel 545 of the header 551. During manufacturing of the example pressure sensing apparatus 500, the one or more header pins (such as, but not limited to, the header pin 517) are inserted into the header pin channels of the header (such as, but not limited to, the header pin channel 545) and connected to the circuit board 511. In some embodiments, one or more filler materials (such as, but not limited to, glass fusion) are also filled into the header pin channels so as to stabilize positions of header pins and/or prevent contacts between header pins and the header.

Example headers of pressure sensing apparatuses in accordance with some embodiments of the present disclosure provide various technical benefits and advantages. For example, as illustrated in connection with FIG. 5C and FIG. 5D, one or more header pins (for attachment to circuit board) and the sensing die can be packed into the example header (while the sensing die is packed inside the header near the diaphragm), thereby reducing system weight and space that are needed for pressure measurement without sacrificing accuracy of pressure measurements. In some embodiments, an example header of the example pressure sensing apparatus may be 7.5 millimeters in diameter, providing compact size while facilitating gauge pressure measurements relative to atmospheric pressure. In some embodiments, example headers may be manufactured with low cost.

In some embodiments, an example header of an example pressure sensing apparatus is secured within a housing of the example pressure sensing apparatus. In the example shown in FIG. 5C and FIG. 5D, the header 551 is secured in the housing 501.

In some embodiments, an example housing of an example pressure sensing apparatus may be a machined part that comprises rigid materials. For example, the housing 501 may comprise stainless steel (such as, but not limited to, stainless steel type 304). Additionally, or alternatively, the housing 501 may comprise other materials.

In some embodiments, an example header may be secured to the example housing through resistance welding. For example, a header lateral surface of the header is in contact with the housing lateral surface of the housing. In the example shown in FIG. 5C and FIG. 5D, a header lateral surface 555 of the header 551 is in contact with a housing lateral surface 557 of the housing 501.

As described above, the example pressure sensing apparatus 500 may be configured to detect, measure, and/or sense absolute pressure (for example, relative to zero pressure). In the example pressure sensing apparatus 500, the header 551 does not comprise any vent channel, and the sensing die 549 is not nested on any opening of any vent channel.

In some embodiments, intermediary media (such as, but not limited to, silicone oil) may be injected to the space between the header 551 and the diaphragm 503 shown in FIG. 5C and FIG. 5D. In some embodiments, the header 551 of the example pressure sensing apparatus 500 may comprise an oil injection channel 559 for injecting silicone oil to the space between the header 551 and the diaphragm 503. In some embodiments, the oil injection channel 559 may be formed in the header through drilling and/or side welding.

For example, as shown in FIG. 5C and FIG, 5D, the header 551 comprises an oil injection channel 559 that extends though the header 551. During manufacturing of the example pressure sensing apparatus 500, silicone oil may be injected through the oil injection channel 559. In some embodiments, the oil injection channel 559 of the header 551 may provide technical benefits and advantages such as, but not limited to, reducing the size of the example pressure sensing apparatus.

In some embodiments, the example pressure sensing apparatus further comprises an oil sealing element that seals the oil injection channel of the header after the silicone oil injection is completed. For example, in the example shown in FIG. 5C and FIG. 5D, the pressure sensing apparatus 500 comprises an oil sealing element 561 that is secured to cover an opening 563 of the oil injection channel 559. In some embodiments, the opening 563 of the oil injection channel 559 may be positioned at the center of the header 551.

In some embodiments, the oil sealing element 561 may be in the shape of a ball and comprise materials such as, but not limited to, silicone, rubber, and/or the like. In some embodiments, the oil sealing element 561 may be welded to the opening 563 of the oil injection channel 559 at the circuit board end 527 of the header 551. In some embodiments, the example pressure sensing apparatus 500 comprises at least one screw pressing the oil sealing element to the opening 563 of the oil injection channel 559 at the center of the header 551.

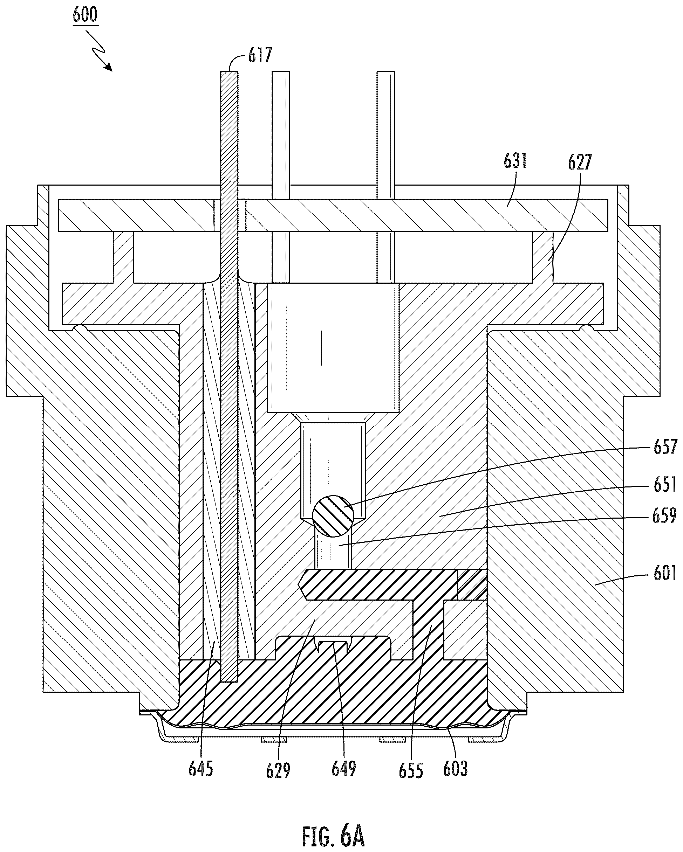

Referring now to FIG. 6A to FIG. 6C, example views of an example pressure sensing apparatus 600 in accordance with some embodiments of the present disclosure are illustrated. In particular, the example pressure sensing apparatus 600 is configured to detect, measure, and/or sense absolute pressure relative to zero pressure.

In the example shown in FIG. 6A, the example pressure sensing apparatus 600 comprises a housing 601 and a diaphragm 603.

In FIG. 6A, a sensing die 649 is positioned behind the internal side of the diaphragm 603. During pressure measurement operations, external pressure exerted on the diaphragm 603 is transferred from the diaphragm 603 to the sensing die 649 through intermediary media (such as, but not limited to, silicone oil) in the space between the header 651 and the diaphragm 603. For example, silicon oil (such as, but not limited to, D.C. 500 series silicone fluid) may be injected into the space between the header 651 and the diaphragm 603, and, subsequently, the space between the header 651 and the diaphragm 603 is hermetically sealed. As such, pressure that is exerted on the diaphragm 603 by the media is transferred onto the sensing die 649 through the silicone oil.

In some embodiments, the housing 601 is in a shape similar to an elongated cylindrical shape. Comparing the housing 501 shown in FIG. 5A to FIG. 5D with the housing 601 shown in FIG. 6A, the housing 501 shown in FIG. 5A to FIG. 5D has been machined to provide external threads (for example, G 1/4-b, M12 X1.5, M10X 1.5, 3/8-24 UNF, or 7/16-20 UNF).

In some embodiments, the diaphragm 603 may serve as a primary interface with the media being measured. In some embodiments, the diaphragm 603 may comprise one or more materials that have corrosion resistance properties. For example, the diaphragm 603 may comprise Type 316/316L stainless steel. In some embodiments, the diaphragm 603 may comprise one or more layers of coatings to prevent corrosion. Additionally, or alternatively, the diaphragm 603 may comprise one or more other materials. During pressure measurement operations, an external side of the diaphragm 603 may be in contact with the media (such as but not limited to, fluid, gas, and/or the like). The media may exert pressure on the external side of the diaphragm 603, and the diaphragm 603 flexes or deflects proportionally to the pressure from the media.

In some embodiments, the example pressure sensing apparatus 600 comprises the sensing die 649. In some embodiments, the sensing die 649 is attached to a header 651 of the example pressure sensing apparatus 600. As shown in FIG. 6A, the sensing die 649 is positioned behind the internal side of the diaphragm 603. During pressure measurement operations, external pressure exerted on the diaphragm 603 is transferred from the diaphragm 603 to the sensing die 649 through intermediary media (such as, but not limited to, silicone oil) in the space between the header 651 and the diaphragm 603. For example, silicon oil (such as, but not limited to, D.C. 600 series silicone fluid) may be injected into the space between the header 651 and the diaphragm 603, and, subsequently, the space between the header 651 and the diaphragm 603 is hermetically sealed. As such, pressure that is exerted on the diaphragm 603 by the media is transferred onto the sensing die 649 through the silicone oil.

In some embodiments, the sensing die 649 may comprise electrical circuits in the form of one or more Wheatstone bridges. In some embodiments, the sensing die 649 comprises piezoresistive materials. In some embodiments, changes in pressure may result in changes in resistance of one or more resistors on the one or more Wheatstone bridges of the sensing die 649. In some embodiments, the sensing die 649 may be in the form of a pressure sensor die from RichardsonRFPD^{®} or NovaSensor^{®}. Additionally, or alternatively, the sensing die 649 may be from other manufacturers.

In some embodiments, the sensing die 649 is further connected to a circuit board 631 through one or more wire bonds and one or more header pins. In particular, the sensing die 649 is connected to one or more header pins through wire bonding, and the one or more header pins are in turn connected to the circuit board 631. Additional details associated with the wire bonds and header pins are described herein.

In some embodiments, the circuit board 631 may be in the form of a PCBA. For example, the circuit board 631 may comprise FR-4 material. Additionally, or alternatively, the circuit board 631 may comprise other materials. In some embodiments, the circuit board 631 detects changes in resistance of the sensing die 649, and provides a voltage output signal that reflects changes in resistance. In some embodiments, the voltage output signal further travels through spring terminals and pin arrangements to an external device. As such, the example pressure sensing apparatus 600 may be used to detect, measure, and/or sense of the pressure of media.

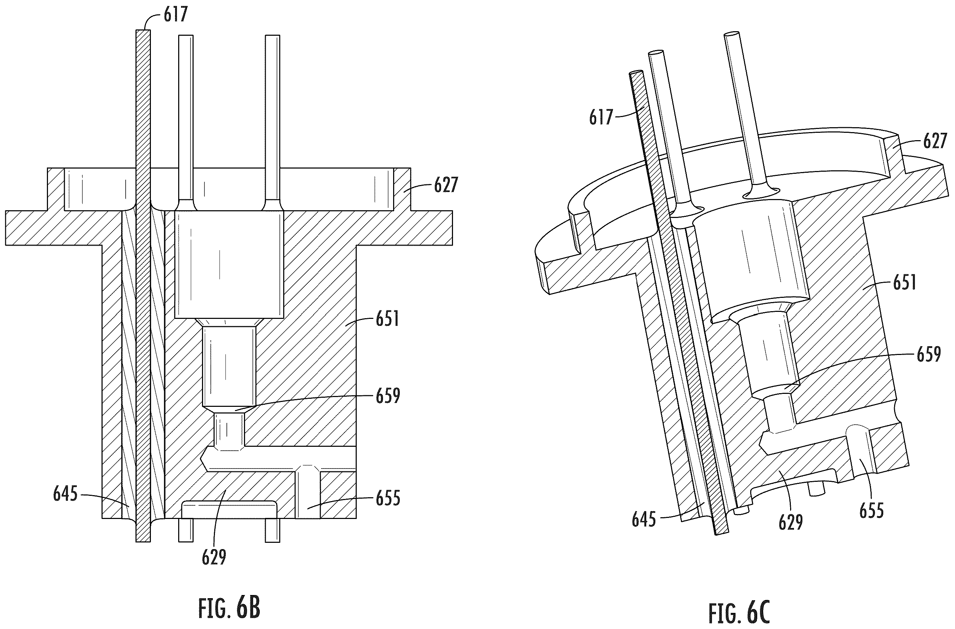

In some embodiments, the header 651 may be in the form of a machined part that comprises rigid materials. For example, the header 651 may comprise steel (such as, but not limited, DC04 unalloyed steel). Additionally, or alternatively, the header 651 may comprise other materials. Referring now to FIG. 6B and FIG. 6C, example cross-sectional views of the example header 651 are illustrated.

In some embodiments, the header of the example pressure sensing apparatus comprises a circuit board end and a sensing die end. In the example shown in FIG. 6B and FIG. 6C, the header 651 comprises a circuit board end 627 and a sensing die end 629. In some embodiments, the circuit board end 627 is opposite to the sensing die end 629.

In some embodiments, the sensing die of the example pressure sensing apparatus is secured to the sensing die end of the header. For example, as shown in FIG. 6A to FIG. 6C, the header 651 comprises a cutout portion at the sensing die end 629 that is recessed from surrounding portions of the sensing die end 629. In such an example, the sensing die 649 is secured to the sensing die end 629 of the header 651 by nesting or mounting on the cutout portion of the sensing die end 629.

In some embodiments, the circuit board of the example pressure sensing apparatus is secured to the circuit board end of the header. For example, as shown in FIG. 6B and FIG. 6C, the header 651 comprises a ring portion at the circuit board end 627, and the circuit board 631 is secured to the circuit board end 627 of the header 651 by attaching to the ring portion of the circuit board end 627.

In some embodiments, the header of the example pressure sensing apparatus comprises one or more header pin channels. For example, as shown in FIG. 6B and FIG. 6C, the header 651 comprises one or more header pin channels (such as, but not limited to, a header pin channel 645). In some embodiments, each of the one or more header pin channels (such as, but not limited to, the header pin channel 645) extends through the header 651 from the sensing die end 629 to the circuit board end 627.

In some embodiments, one or more header pins are positioned in the header pin channels of the header. For example, as shown in FIG. 6B and FIG. 6C, a header pin 617 is positioned in the header pin channel 645 of the header 651. During manufacturing of the example pressure sensing apparatus 600, the one or more header pins (such as, but not limited to, the header pin 617) are inserted into the header pin channels of the header (such as, but not limited to, the header pin channel 645) and connected to the circuit board 631. In some embodiments, one or more filler materials (such as, but not limited to, glass fusion) are also filled into the header pin channels so as to stabilize positions of header pins and/or prevent contacts between header pins and the header.

Example headers of pressure sensing apparatuses in accordance with some embodiments of the present disclosure provide various technical benefits and advantages. For example, as illustrated in connection with FIG. 6B and FIG. 6C, one or more header pins (for attachment to circuit board) and the sensing die can be packed into the example header (while the sensing die is packed inside the header near the diaphragm), thereby reducing system weight and space that are needed for pressure measurement without sacrificing accuracy of pressure measurements. In some embodiments, an example header of the example pressure sensing apparatus may be 7.5 millimeters in diameter, providing compact size while facilitating gauge pressure measurements relative to atmospheric pressure. In some embodiments, example headers may be manufactured with low cost.

As described above, example pressure sensing apparatuses in accordance with some embodiments of the present disclosure may be configured to detect, measure, and/or sense absolute pressure (for example, relative to zero pressure). In such example pressure sensing apparatuses, the header does not comprise any vent channel, and the sensing die is not nested on any opening of any vent channel.

In some embodiments, intermediary media (such as, but not limited to, silicone oil) may be injected to the space between the header 651 and the diaphragm 603 shown in FIG. 6A. In some embodiments, the header 651 of the example pressure sensing apparatus 600 may comprise an oil injection channel 655 for injecting silicone oil to the space between the header 651 and the diaphragm 603. In some embodiments, the oil injection channel 655 may be formed in the header through drilling and/or side welding.

For example, as shown in FIG. 6B and FIG, 6C, the header 651 comprises an oil injection channel 655 that extends though the header 651. During manufacturing of the example pressure sensing apparatus 600, silicone oil may be injected through the oil injection channel 655. In some embodiments, the oil injection channel 655 of the header 651 may provide technical benefits and advantages such as, but not limited to, reducing the size of the example pressure sensing apparatus.

In some embodiments, the example pressure sensing apparatus further comprises an oil sealing element that seals the oil injection channel of the header after the silicone oil injection is completed. For example, in the example shown in FIG. 6A, the pressure sensing apparatus 600 comprises an oil sealing element 657 that is secured to cover an opening 659 of the oil injection channel 655. In some embodiments, the opening 659 of the oil injection channel 655 may be positioned at the center of the header 651.

In some embodiments, the oil sealing element 657 may be in the shape of a ball and comprise materials such as, but not limited to, silicone, rubber, and/or the like. In some embodiments, the oil sealing element 657 may be welded to the opening 659 of the oil injection channel 655 at the circuit board end 627 of the header 651. In some embodiments, the example pressure sensing apparatus 600 comprises at least one screw pressing the oil sealing element to the opening 659 of the oil injection channel 655 at the center of the header 651.

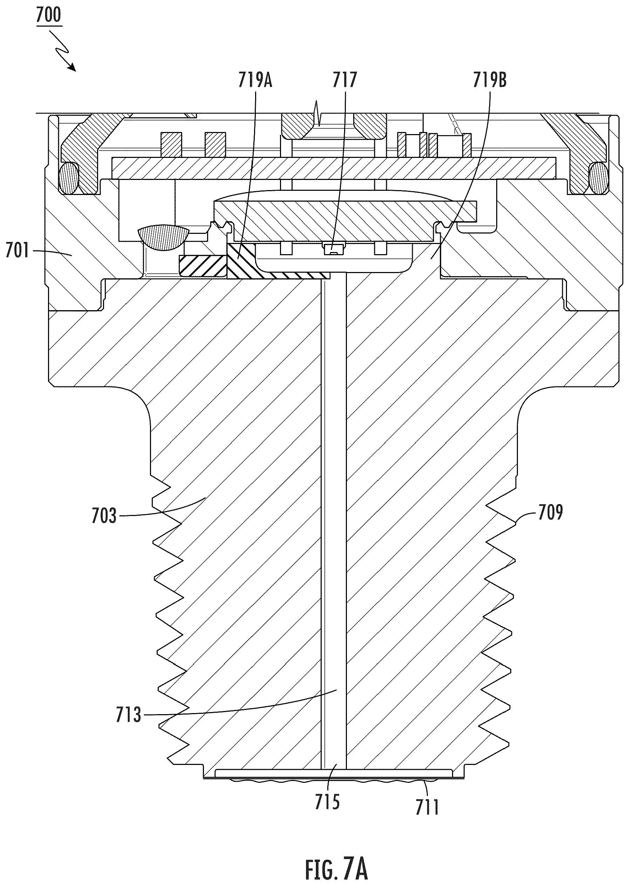

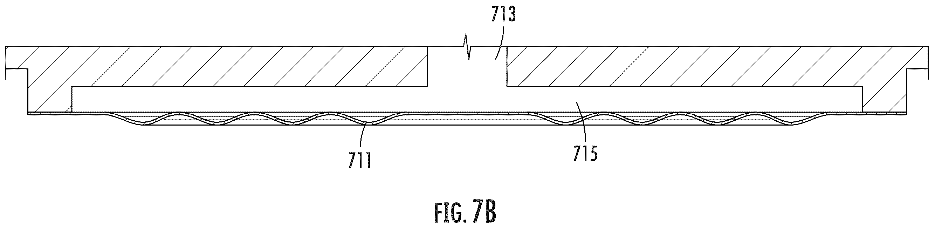

Referring now to FIG. 7A and FIG. 7B, example cross-section views of an example pressure sensing apparatus 700 in accordance with some embodiments of the present disclosure are illustrated. In particular, the example pressure sensing apparatus 700 is configured to detect, measure, and/or sense absolute pressure relative to zero pressure.

In some embodiments, the example pressure sensing apparatus 700 comprises a header 701 and a housing 703. Comparing the example pressure sensing apparatus 700 shown in FIG. 7A and FIG. 7B with other example pressure sensing apparatuses shown above, the header 701 is secured on top of the housing 703 instead of being positioned within the housing 703. In some embodiments, the header 701 may be resistance welded onto the housing 703.

In some embodiments, the housing 703 may comprise rigid materials such as, but not limited to, stainless steel. In some embodiments, the housing 703 may comprise a shank portion 709 with external threads. In some embodiments, the diaphragm 711 may be welded onto the housing 703. As shown in FIG. 7B, the diaphragm 711 may be in the form of flush diagram that level with the surrounding surfaces to the housing 703.

In some embodiments, the diaphragm 711 may serve as a primary interface with the media being measured. During pressure measurement operations, an external side of the diaphragm 711 may be in contact with the media (such as but not limited to, fluid, gas, and/or the like). The media may exert pressure on the external side of the diaphragm 711, and the diaphragm 711 flexes or deflects proportionally to the pressure from the media.

In some embodiments, the housing 703 comprises an oil tube 713 that is filled with the silicone oil 715. In some embodiments, the silicone oil 715 transfers pressure from the diaphragm 711 to the sensing die 717 that is secured on the header 701. In some embodiments, the housing 703 comprises protrusions (for example, a protrusion 719A and a protrusion 719B) that reduce the volume of silicone oil.

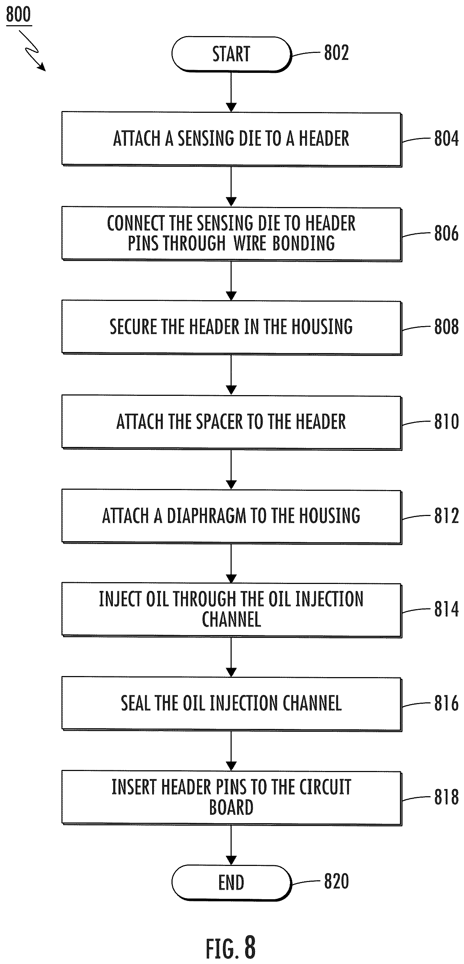

Referring now to FIG. 8, example methods of assembling an example pressure sensing apparatus (such as, but not limited to, the example pressure sensing apparatus 100 shown in FIG. 1A to FIG. 1D, the example pressure sensing apparatus 200 shown in FIG. 2A to FIG. 2E, the example pressure sensing apparatus 300 shown in FIG. 3A to FIG. 3B, the example pressure sensing apparatus 400 shown in FIG. 4A and FIG. 4B, the example pressure sensing apparatus 500 shown in FIG. 5A to FIG. 5D, the example pressure sensing apparatus 600 shown in FIG. 6A to FIG. 6C, and the example pressure sensing apparatus 700 shown in FIG. 7A to FIG. 7B) in accordance with some embodiments of the present disclosure are illustrated.

In the example shown in FIG. 8, an example method 800 starts at step/operation 802. In some embodiments, subsequent to step/operation 802, the example method 800 proceeds to step/operation 804. In some embodiments, at step/operation 804, the example method 800 comprises attaching a sensing die to a header. In some embodiments, the sensing die is attached to the header through adhesive.

In some embodiments, subsequent and/or in response to step/operation 804, the example method 800 proceeds to step/operation 806. In some embodiments, at step/operation 806, the example method 800 comprises connecting the sensing die to one or more header pins through wire bonding. In some embodiments, the sensing die is connected to the one or more header pins through one or more wire bonds.

In some embodiments, subsequent and/or in response to step/operation 806, the example method 800 proceeds to step/operation 808. In some embodiments, at step/operation 808, the example method 800 comprises securing the header in the housing. In some embodiments, the header may be secured in the housing through resistance welding.

In some embodiments, subsequent and/or in response to step/operation 808, the example method 800 proceeds to step/operation 810. In some embodiments, at step/operation 810, the example method 800 comprises attaching the spacer to the header. In some embodiments, the spacer is attached to the header through adhesive.

In some embodiments, subsequent and/or in response to step/operation 810, the example method 800 proceeds to step/operation 812. In some embodiments, at step/operation 812, the example method 800 comprises attaching a diaphragm to the housing. In some embodiments, the diaphragm is welded to the housing.

In some embodiments, subsequent and/or in response to step/operation 812, the example method 800 proceeds to step/operation 814. In some embodiments, at step/operation 814, the example method 800 comprises injecting oil (such as silicon oil) through an oil injection channel of the header.

In some embodiments, subsequent and/or in response to step/operation 814, the example method 800 proceeds to step/operation 816. In some embodiments, at step/operation 816, the example method 800 comprises sealing the oil injection channel of the header. In some embodiments, the oil injection channel of the header is sealed by using an oil sealing element.

In some embodiments, subsequent and/or in response to step/operation 816, the example method 800 proceeds to step/operation 818. In some embodiments, at step/operation 818, the example method 800 comprises inserting header pins to a circuit board.

In some embodiments, subsequent and/or in response to step/operation 818, the example method 800 proceeds to step/operation 820 and ends.

It is to be understood that the disclosure is not to be limited to the specific embodiments disclosed, and that modifications and other embodiments are intended to be included within the scope of the appended claims. Although specific terms are employed herein, they are used in a generic and descriptive sense only and not for purposes of limitation, unless described otherwise.

## Claims

1. A pressure sensing apparatus comprising:
a spacer secured between a header and a diaphragm, wherein a spacer opening extends through the spacer and comprises a sensing die opening portion and one or more header pin opening portions; and
a sensing die attached to the header and positioned in the sensing die opening portion of the spacer opening, wherein one or more wire bonds connect the sensing die to one or more header pins positioned in the one or more header pin opening portions.

2. The pressure sensing apparatus of claim 1, wherein the spacer opening comprises one or more wire bond opening portions that connect the sensing die opening portion to the one or more header pin opening portions.

3. The pressure sensing apparatus of claim 2, wherein the one or more wire bonds are positioned in the one or more wire bond opening portions.

4. The pressure sensing apparatus of claim 1, wherein the spacer opening comprises one or more spacer opening inner surfaces having one or more tapered edges.

5. The pressure sensing apparatus of claim 4, wherein the sensing die and the one or more wire bonds are not in contact with the one or more spacer opening inner surfaces.

6. The pressure sensing apparatus of claim 1, wherein a header pin opening diameter of the one or more header pin opening portions approximates a header pin diameter of the one or more header pins.

7. The pressure sensing apparatus of claim 1, wherein a spacer diameter of the spacer is larger than a header diameter of the header.

8. The pressure sensing apparatus of claim 1, wherein the header is secured in a housing, wherein a header lateral surface of the header is in contact with a housing lateral surface of the housing.

9. The pressure sensing apparatus of claim 8, wherein the diaphragm comprises a flat circumferential portion that supports the spacer and is secured between the housing and a ring.

10. The pressure sensing apparatus of claim 8, wherein the housing lateral surface comprises an annular groove portion, wherein the spacer comprises a circumferential tongue portion.

11. The pressure sensing apparatus of claim 10, wherein the spacer is secured to the housing through an engagement between the circumferential tongue portion and the annular groove portion.

12. The pressure sensing apparatus of claim 1, wherein the header comprises a circuit board end and a sensing die end, wherein the circuit board end is opposite to the sensing die end, wherein the sensing die is secured to the sensing die end, wherein a circuit board is secured to the circuit board end.

13. The pressure sensing apparatus of claim 12, wherein the header comprises one or more header pin channels that extend though the header from the circuit board end to the sensing die end.

14. The pressure sensing apparatus of claim 13, wherein the one or more header pins are positioned in the one or more header pin channels and connected to the circuit board.

15. The pressure sensing apparatus of claim 12, wherein the header further comprises a vent channel that extends through the header from the circuit board end to the sensing die end.
